# EUROPEAN PATENT SPECIFICATION

(11) **EP 2 966 378 B1**
(45) Date of publication and mention of the grant of the patent: **02.09.2020**
(21) Application number: 15175500.6
(22) Date of filing: 06.07.2015
(51) Int. Cl.: F24F 13/20, F24F 1/022, F24F 3/14, F24F 1/04

(54) **DEHUMIDIFIER**
ENTFEUCHTER
DESHUMIDIFICATEUR

(30) Priority: 09.07.2014 KR 20140086333
(43) Date of publication of application: 13.01.2016
(73) Proprietor: LG Electronics Inc., Yeongdeungpo-gu Seoul 150-721 (KR)
(72) Inventor: Lee, Kunyoung, 152-802 Seoul (KR); Lee, Jongsu, 153-802 Seoul (KR); Yoon, Sangyoun, 153-802 Seoul (KR)
(74) Representative: Vossius & Partner Patentanwälte Rechtsanwälte mbB

(56) References cited:
- CN-U- 203 454 275
- KR-A- 20040 031 207

## Description

### BACKGROUND

The present disclosure relates to a dehumidifier.

In general, dehumidifiers are apparatuses which suction wet humid air within an indoor space into a case and allow the air to pass through a heat exchanger including a condenser and an evaporator, thereby reducing the humidity. Then, the dehumidified air may be discharged again into the indoor space to reduce the humidity within the indoor unit.

That is, such a dehumidifier may absorb heat from surrounding air by evaporating a liquid refrigerant in the evaporator. Here, the evaporator may decrease in temperature while the refrigerant is evaporated, and thus, the air passing through the evaporator may also decrease in temperature. Thus, since the surrounding air of the evaporator decreases in temperature, moisture contained in the air may be condensed to form dew on a surface of the evaporator. Thus, the dehumidified air may be discharged into the indoor space to reduce the humidity within the indoor space.

In recent years, large-scale and multifunctional dehumidifiers are being released to improve dehumidifying performance and user's convenience. Thus, high-capacity and large-scale humidifiers are greatly to be preferred.

CN 203 454 275 U discloses a dehumidifier according to the preamble of claim 1. The dehumidifier comprises a water storage tank, a base, a separating plate and a front panel. The water storage tank is arranged in a cavity formed by the base, the separating plate and the lower edge of the front panel, a handle is connected to the upper edge of the outer side of the water storage tank in a pivoted mode, and the lower edge of the front panel and the upper edge of the outer side of the water storage tank are of slope structures which gradually rise from inside to outside. The water storage tank is convenient to use and simple in structure, for taking out the water storage tank, users just need to lift the handle in an inclined mode and pull the handle upwards in the standing state, for putting the water storage tank back, the users just need to operate reversely, and therefore the design of the water storage tank of the dehumidifier is humanized.

A dehumidifier in which a lower portion of an evaporator has a basket shape to collect and store condensed water is disclosed in Korean Patent Publication No. 10-2005-0083417. In the dehumidifier having the above-described structure, if a preset amount or more of water is collected into the basket, a user may withdraw the basket to discard water within the basket and then mount the basket again.

Korean Patent Publication No. KR 2004 0031207A discloses a dehumidifier with a drawer-type water tank, wherein the drawer forms the water tank itself. A rack gear is provided on each of an upper horizontal side of the water tank and a lower side of a frame supporting a heat exchanger. A corresponding pinion gear extends from a side wall of the housing inwards. In this example it may be cumbersome for a user to remove the filled water tank from the dehumidifier without spilling of water.

However, as the dehumidifier increases in capacity, the basket for storing the collected water may also increase in capacity. In this case, when the basket is withdrawn because the basket is fully filled with water, it may be difficult to withdraw the basket due to a weight of the collected water.

In detail, the dehumidifier according to the related art may include a main body including an air suction part and a discharge part, a heat exchanger provided inside the air suction part and heat-exchanged with indoor air to perform a dehumidification operation, a fan assembly disposed at a front side of the heat exchanger to forcibly blow the indoor air, and a water tank disposed on a side of the heat exchanger to collect condensed water.

The condensed water condensed in the evaporator may be stored in a drain pan and then introduced into the water tank along a predetermined guide structure. When a predetermined amount or more of water is stored in the water tank, the water tank may be separated to drain the water within the water tank.

In case of the dehumidifier according to the related art, since the water tank is disposed inside the main body, a separate water tank cover for covering the water tank may be provided. When the water tank cover is provided, the user has to open the water tank cover so as to separate the water tank from the main body and then withdraw the water tank.

To solve the above-described limitation, a structure of a dehumidifier in which a water tank is rotatably mounted on a recessed water tank mounting part of a main body, and the water is withdrawn in a state where the water tank rotates by manipulation of a water tank handle disposed on a front surface of the water tank is disclosed in Korean Patent Publication No. 10-2013-0138478.

However, in case of this structure, a portion of the water tank, in which water is collected, has to have small capacity so as to rotating without interfering in the state where the water tank is mounted on the water tank mounting part. Also, since a space in which the water tank rotates without interfering is further provided in the main body, spatial efficiency may be deteriorated.

Also, if the water tank rotates in the state where the water is fully filled into the water tan, the water tank may easily fall down or have a difficulty in manipulating because a separate restriction structure is not provided.

### SUMMARY

To resolve the above deficiencies there is proposed a dehumidifier as defined in claim 1. Preferred embodiments are defined in the dependent claims.

Embodiments provide a dehumidifier in which a water tank that contains condensed water is easily withdrawn and a method for withdrawing the water tank of the dehumidifier.

In one embodiment, a dehumidifier including: a main body in which a heat exchange module is disposed; a water tank disposed under the heat exchange module to collect condensed water generated in the heat exchange module; a tank drawer in which the water tank is accommodated, the tank drawer being slidably disposed on the main body; and a frame supporting the heat exchange module, the frame partitioning a space in which the tank drawer is accommodated from a space in which a compressor is provided, characterized in that the dehumidifier further includes: a main guide disposed on each of both sides of the frame to guide the slidable insertion/withdrawal of the tank drawer; and a sub guide disposed on each of both sides of the frame to accommodate a rotation protrusion that protrudes from each of both side surfaces of the tank drawer, the sub guide guiding slidable movement and rotation of the rotation protrusion.

A rack gear is disposed on a top surface of the main guide in a direction in which the tank drawer is withdrawn, and a pinion gear coupled to the rack gear to move along the main guide is disposed on the tank drawer.

A driving motor for rotating the pinion gear may be further provided on the tank drawer.

The main guide may include: a horizontal part extending in a front/rear direction in which the tank drawer is inserted and withdrawn; and a rotation part, which is tilted or rounded to guide the rotation of the tank drawer, extending from an end of the horizontal part.

The dehumidifier may further include: a guide member disposed above a rotation shaft of the tank drawer to protrude from each of both left and right surfaces of the tank drawer; and a guide hole passing through the main guide to allow the guide member to be inserted therein, thereby guiding the movement of the guide member.

A tilted part that contacts a bottom surface of the main body and is tilted to allow the tank drawer to be withdrawn forward by a self-weight thereof may be further disposed on a bottom surface of the tank drawer.

A base roller that contacts the tilted part and is rolled when the tank drawer is inserted and withdrawn may be disposed on the main body.

A main body support extending downward to prevent the dehumidifier from falling down onto the ground when a center of gravity of the tank drawer moves due to the withdrawal of the tank drawer may be further disposed on a base plate defining a bottom surface of the dehumidifier.

A rotation shaft of the tank drawer may be disposed at a rear side of the center of gravity of the tank drawer.

A locker and latch which are selectively hooked with each other to maintain a closed state of the tank drawer may be disposed on the tank drawer and the frame, respectively.

When the restriction between the latch and the locker is released, the latch may provide a repulsive force by which the tank drawer is withdrawable.

The main guide may further extend than the sub guide in a direction in which the tank drawer is withdrawn.

The tank drawer may be opened upward to allow the water tank to be accessible through the opening of the tank drawer, and the opening of the tank drawer may be fully exposed in the state where the tank drawer rotates.

The tank drawer may include: a front surface part defining a portion of an outer appearance of the main body; and an accommodation part, which provides a space for accommodating the water tank, in a back surface of the front surface part.

An upper extension part extending toward the main guide to move along the main guide and a lower extension part extending toward the sub guide to move along the sub guide may be disposed on both side surfaces of the accommodation part, respectively, and the upper extension part may further lengthily extend than the lower extension part.

The details of one or more embodiments are set forth in the accompanying drawings and the description below. Other features will be apparent from the description and drawings, and from the claims.

### BRIEF DESCRIPTION OF THE DRAWINGS

Fig. 1 is a front perspective view of a dehumidifier according to an embodiment.
Fig. 2 is a rear perspective view of the dehumidifier.
Fig. 3 is an exploded perspective view of the dehumidifier.
Fig. 4 is an exploded perspective view of the housing assembly that is one component of the dehumidifier.
Fig. 5 is an exploded perspective view illustrating a coupling structure between a top cover assembly that is one component of the dehumidifier and a main body.
Fig. 6 is an exploded perspective view of the top cover assembly.
Fig. 7 is an exploded perspective view illustrating a coupling structure of the side deco that is one component of the dehumidifier.
Fig. 8 is an exploded perspective view illustrating a coupling structure of a PCB assembly that is one component of the dehumidifier.
Fig. 9 is an exploded perspective illustrating a coupling structure of a tank drawer that is one component of the dehumidifier.
Fig. 10 is a side view illustrating a structure of a guide assembly for guiding insertion/withdrawal of a water tank assembly.
Fig. 11 is a perspective view of a water tank that is one component of the dehumidifier.
Fig. 12 is a side view of the dehumidifier before the water tank assembly is withdrawn.
Fig. 13 is a side view of the dehumidifier in the state where the water tank assembly is withdrawn.
Fig. 14 is a side view of the guide assembly in the state where the water tank assembly is withdrawn.
Fig. 15 is a side view of the dehumidifier in a state where the water tank assembly is tilted after being withdrawn.
Fig. 16 is a side view of the guide assembly in the state where the water tank assembly is tilted after being withdrawn.
Fig. 17 is a perspective view illustrating a state in which the water tank is separated from the water tank assembly.
Fig. 18 is an exploded perspective illustrating a coupling structure of a tank drawer that is one component of a dehumidifier according to another embodiment.
Fig. 19 is a side view of a guide assembly before a water tank assembly that is one component of the dehumidifier according to another embodiment.
Fig. 20 is a side view of the guide assembly in the state where the water tank assembly is withdrawn.
Fig. 21 is a side view of the guide assembly in the state where the water tank assembly is tilted after being withdrawn.

### DETAILED DESCRIPTION OF THE EMBODIMENTS

Reference will now be made in detail to the embodiments of the present disclosure, examples of which are illustrated in the accompanying drawings. The technical scope of the embodiments will fall within the scope of this disclosure, and addition, deletion, and modification of components or parts are possible within the scope of the embodiments.

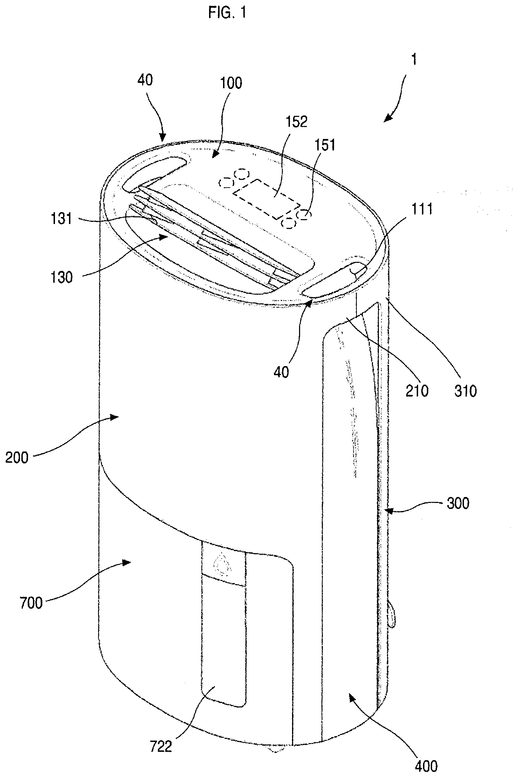

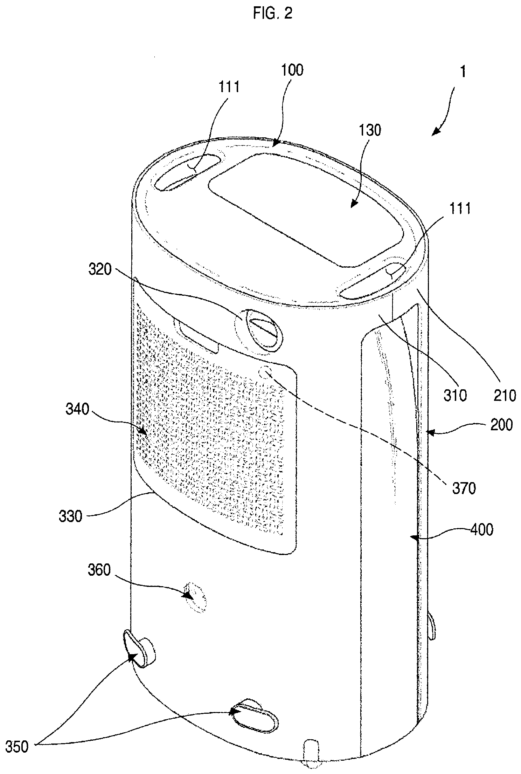

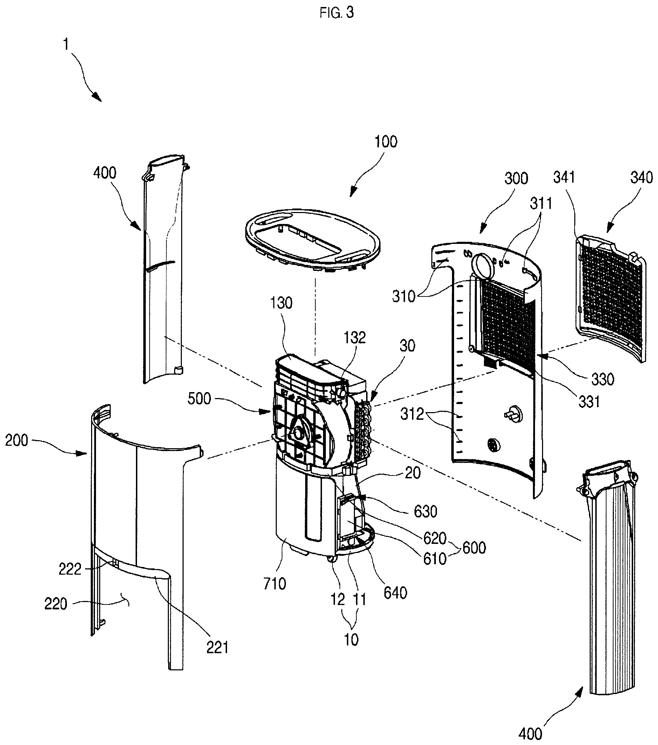

Fig. 1 is a front perspective view of a dehumidifier according to an embodiment. Fig. 2 is a rear perspective view of the dehumidifier. Fig. 3 is an exploded perspective view of the dehumidifier.

Referring to Figs. 1 to 3, a main body defining an outer appearance of a dehumidifier 1 according to an embodiment has a generally circular cross-section when viewed from an upper side and a cylindrical shape having a predetermined height.

The dehumidifier 1 may have an outer appearance that is defined by a top cover assembly 100 defining a top surface, a base pan assembly 10 defining a bottom surface, front and rear cases 200 and 300 defining front and rear surfaces, and a side deco 400 defining a portion of each of both side surfaces.

In detail, the tap cover assembly 100 may define a top surface of the dehumidifier 1 and has an oval shape. Also, a handle hole 111 into which a hand of a user is inserted to grasp the dehumidifier 1 when the dehumidifier 1 moves may be defined in each of both sides of the top cover assembly 100.

Also, a louver 130 is disposed in a front portion of the top cover assembly 100. The louver 130 has a plurality of discharge holes 131 through which air dehumidified within the dehumidifier 1 is discharged. The louver 130 is rotatably mounted on the top cover assembly 100. Thus, the louver 130 may rotate to expose the discharge holes 131 thereof when the dehumidifier 1 operates. On the other hand, when the dehumidifier 1 does not operate, the louver 130 may rotates and does not expose the discharge holes 131 thereof. Thus, when dehumidifier 1 does not operate, the louver 130 may form the same plane as the top cover assembly 100 to define the outer appearance of the top surface of the dehumidifier 1. The louver 130 may rotate by a motor 132. When the dehumidifier 1 operates, the louver 130 may automatically rotate to open the discharge holes 131, thereby adjusting a discharge direction of the air.

A manipulation part 151 is disposed on the top cover assembly 100. The manipulation part 151 may be manipulated by the user to manipulate the dehumidifier 1. The manipulation part 151 may be provided in a rear space of the louver 130. Also, the manipulation part 151 may be manipulated by the user and confirmed through the top surface of the top cover assembly 100. The manipulation part 151 may include a capacitive-type touch sensor, a button, or a switch. Also, a display part 152 for displaying an operation state of the dehumidifier 1 may be further disposed on one side adjacent to the manipulation part 151.

The base pan assembly 10 includes a base pan 11 defining the bottom surface of the dehumidifier 1 and a wheel 12 mounted on the base pan 11. The base pan 11 may provide a surface on which a compressor 20 that is main component of the dehumidifier 1 and a plurality of components are disposed. For this, a plurality of reinforcing ribs that cross each other are disposed on the base pan 11 to prevent the base pan 11 from being deformed or damaged even though the plurality of components are mounted on the base pan 11. Also, the whole shape of the base pan 11 may have an oval shape to correspond to that of the top cover assembly 100.

Also, a wheel 12 may be disposed on a bottom surface of the base pan 11 to allow the dehumidifier 1 to easily move. Particularly, when the user grasps the handle 40 of the dehumidifier 1 to move the dehumidifier 1, the wheel 12 may allow the user to easily push or pull the dehumidifier 1.

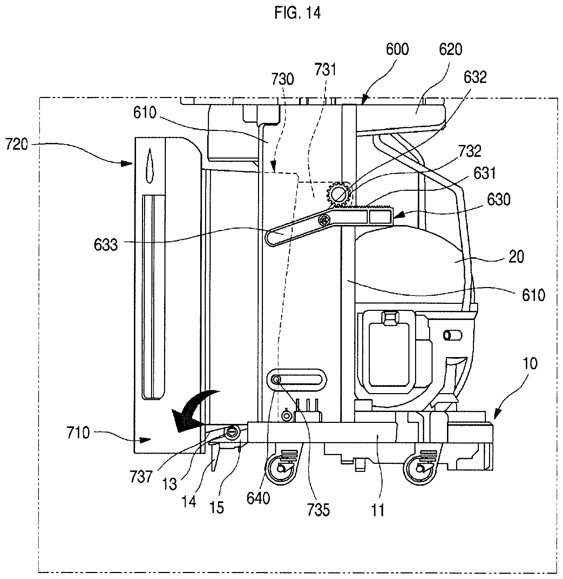

A base roller 13 (see Fig. 14) is disposed on a front end of a top surface of the base pan 11. The base roller 13 may contact a bottom surface of a tank drawer 710 and then rolled when the tank drawer 710 into which a water tank 800 is accommodated is withdrawn forward. When the tank drawer 710 is completely withdrawn, a weight center of the tank drawer 710 is defined at a relatively front side when compared to the base roller 13. Thus, the tank drawer 710 may be tilted.

The front case 200 and the rear case 300 define the front and rear outer appearances of the dehumidifier 1. The front case 200 and the rear case 300 may be formed of plate-shaped materials and coupled to the tap cover assembly 100 and the bottom surface of the base fan 11, respectively. Thus, the front case 200 and the rear case 300 may have curvatures corresponding to circumferences of the top cover assembly 100 and the base pan 11, respectively.

A front extension part 210 extending backward is disposed on each of both left and right sides of an upper end of the front case 200. The front extension part 210 may contact a rear extension part 310 of the rear case 300 to connect the front case 200 to the rear case 300. Also, the front extension part 210 is coupled along a circumference of the top cover assembly 100.

Also, a tank mounting part 220 on which the water tank assembly 700 is disposed is disposed below the front case 200. The tank mounting part 220 may be opened to correspond to a shape of a tank drawer 710 constituting the water tank assembly 700. A stepped part 221 extends downward from an upper end of the tank mounting part 220. When the tank drawer 710 is closed, the tank mounting part 220 may contact a bottom surface of the tank drawer 710. Also, a latch hole 222 through which a locker 721 protruding from the tank drawer 710 is inserted or withdrawn is defined in a center of the stepped part 221.

The top cover coupling parts 311 to be coupled to the top cover assembly 100 are disposed on an upper portion of a back surface of the front case 200. The top cover coupling parts 311 are disposed above the front case 200 and the rear case 300. Also, the top cover coupling parts 211 may be provided in plurality at a predetermined distance so that the top cover coupling parts 311 are hooked along a circumference of the top cover assembly 100. Here, the tap cover coupling part 311 may have the same structure and shape as those of the front and rear cases 200 and 300 except for a position thereof.

Also, a plurality of deco coupling parts 312 may be disposed along both ends of the back surface of the front case 200. The deco coupling parts 312 may be coupled to the side deco 400 and vertically spaced a predetermined distance from each other along a side end of the front case 200. Also, the deco coupling parts 312 may be coupled to match deco coupling holes defined in the side deco 400, thereby coupling the front case 200 to the side deco 400.

The deco coupling parts 312 may be disposed on both left and right sides of the front case 200. Here, the deco coupling parts 312 may have the same structure and shape except for its position. Thus, the deco coupling parts 312 may be disposed to have the same structure and shape on the front case 200 and the rear case 300. Thus, all of the front case 200 and the rear case 300 may have structures that are coupled to being coupled and fixed to the side deco 400.

The rear case 300 may define a rear outer appearance of the dehumidifier 1 and have a shape corresponding to that of the front case 200. A rear extension part 310 may be disposed on each of both left and right ends of an upper portion of the rear case 300 and coupled to the front extension part 210.

Also, an accessory hole 320 is defined in an upper portion of the rear case 300. The accessory hole 320 may be a hole through which an accessory connection part that will be described later passes. That is, the accessory hole 320 may be opened in a shape corresponding to that through which the accessory connection part 570 passes to protrude to the outside.

Also, a suction grill part 330 is disposed below the accessory hole 320. The suction grill part 330 has a rectangular shape that is recessed inward. Also, the suction grill part 330 has a shape corresponding to that of a heat exchange module 30 that will be described later. The suction grill part 330 has a plurality of suction holes 331 so that external air is introduced into the dehumidifier 1.

Also, a grill cover 340 is mounted on a recessed outer portion of the suction grill part 330. The grill cover 340 covers a recessed space of the suction grill part 330 and forms the same line as an outer surface of the rear case 330. A plurality of holes may be defined in the grill cover 340 so that air flows through the suction grill part 330.

The grill cover 340 is detachably disposed on the suction grill part 330. Also, a filter assembly 341 may be mounted between the suction grill part 330 and the grill cover 340. The filter assembly 341 may filter foreign substances of the air introduced through the suction grill part 330. The filter assembly 341 may be fixed to the suction grill part 330 or fixed to a rear surface of the filter assembly 341 as illustrated in Fig. 3.

A code cord fixing hole 360 and a cord holder 350 may be provided below the suction grill part 330. The cord holder 350 may be provided in a pair in each of both left and right sides. The cord holder 350 protrudes backward from the rear case 300 so that a power line for supplying a power to the dehumidifier 1 is wound around the pair of cord holder 350 and stored. The protruding end of the cord holder extends outward.

The cord fixing hole 360 is disposed above the cord holder 350. Also, the cord fixing hole 360 may be disposed at a central portion and recessed in a space corresponding to a socket so that a plug of an end of the power line is inserted. Thus, the power line is wound around the cord holder 350, and then the plug is inserted into the cord fixing hole 360 to effectively fix and store the power line.

The top cover coupling part 311 and the deco coupling part 312 which have the same shape as that of the front case 200 may be disposed on an inner surface of the rear case 300. The top cover coupling part 311 and the deco coupling part 312 may have the same shape and function as the front case 200 except for their position.

Thus, the top cover assembly 100 and the base pan 11 may be fixedly mounted on lower ends of the front case 200 and the rear case 300, respectively. The side deco 400 may be mounted between the front case 200 and the rear case 300 to define the whole outer appearance of the dehumidifier 1.

A housing assembly 500 including a blowing fan 540 and the motor 530 and the heat exchange module 30 heat-exchanged with the suction air may be disposed in an upper portion inside the front case 200 and the rear case 300. Electronic components including a frame 600 supporting the housing assembly 500 and the heat exchange module 30, the water tank assembly 700 for collecting condensed water generated in the heat exchange module 30, and a compressor 20 connected to the heat exchange module 30 to compress a refrigerant may be disposed in a lower portion inside the front case 200 and the rear case 300.

In detail, the frame 600 is mounted to a center of the base pan 11. The frame 600 includes a vertical part 610 extending vertically and a horizontal part 620 extending horizontally from an upper end of the vertical part 610.

The vertical part 610 may partition a lower space of the dehumidifier 1 in a front/rear direction to define a front space in which the water tank assembly 700 is mounted and a rear space in which the electronic components including the compressor 20 are mounted. Also, a main guide 630 a sub guide are disposed on both left and right sides of the vertical part 610 so that the tank drawer 710 is slidably inserted or withdrawn.

The horizontal part 620 may partition the inner space of the dehumidifier 1 into upper and lower spaces so that the housing assembly 500 and the heat exchange module 30 are seated. Also, a passage for guiding the condensed water generated in the heat exchange module 30 to the water tank 800 is defined in the horizontal part 620.

A specific shape of the frame 600 will be described below in more detail.

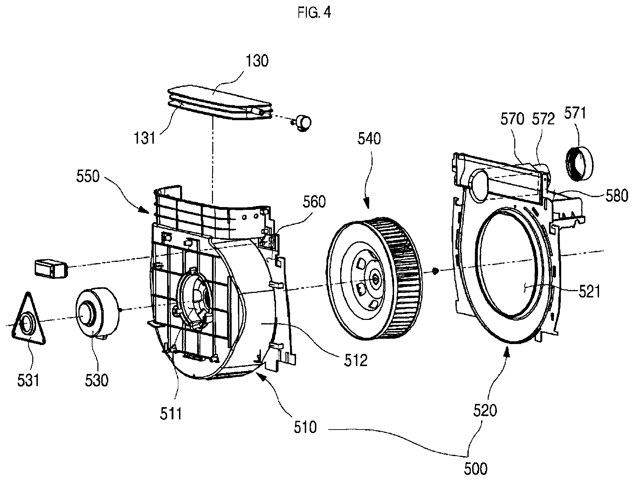

Fig. 4 is an exploded perspective view of the housing assembly that is one component of the dehumidifier.

As illustrated in Fig. 4, the motor 530 and blowing fan 540 for forcibly blowing air are mounted on the housing assembly 500. The housing assembly 500 is seated on an upper portion of the horizontal part 620 of the frame 600. The housing assembly 500 includes a housing case 510 and a housing cover 520. The housing cover 520 and the housing case 510 may be coupled to each other to form a space in which the blowing fan 540 is accommodated and a space through which air flows.

The housing case 510 has a shape of which a rear surface is opened to form the space in which the blowing fan 540 is accommodated, and a top surface is opened to allow the louver 130 to be mounted. Also, the opened entire rear surface of the housing case 510 may be covered by the housing cover 520 having a shape corresponding thereto.

A motor accommodation part 511 for accommodating the motor 530 is recessed from a front surface of the housing case 510. A rotation shaft of the motor 530 may pass through the housing case 510 to extend inward. A BLDC motor having a relatively long life-cycle and easily controlled in rotation rate may be used as the motor 530 for rotating the blowing fan 540. Also, the motor 530 may be fixedly mounted on the housing case 510 by the motor bracket 531.

Also, the blowing fan 540 that axially suctions air to radially discharge the suctioned air may be disposed in an inner space of the housing case 510. A sirocco fan having less noises and superior blowing performance may be used as the blowing fan 540. Air introduced into the housing case by the rotation of the blowing fan 540 may flow along the inner surface of the housing case 510 and then be discharged to the outside through the louver 130.

Also, the inner surface of the housing case 510 may have a curved shape to improve the flow of the air. A curved part 512 having a curvature corresponding to that of the inside may be disposed on one side surface of both side surfaces of the housing case 510. The curved part 512 may be formed from a lower end of the housing case 510 to a louver mounting part 550 on which the louver 130 is mounted. A capacitor mounting part 560 on which a capacitor 595 is mounted may be exposed between the curved part 512 and the louver mounting part 550. That is, the curved part 512 of the housing case 510 may be formed along the curvature of the inner surface of the housing case 510 to form the capacitor mounting part 560.

The housing cover 520 may have a plate shape corresponding to that of the housing case 510. An orifice 521 defining a passage through which the air is suctioned may be defined to be opened in the housing cover 520. Also, the accessory connection part 570 may be disposed on a portion of an upper portion of the housing cover 520. The accessory connection part 570 may have a shape to allow the inside of the housing case 510 on which the louver 130 is mounted to communicate with an external space. The accessory connection part 570 may have an end with a shape corresponding so that the end passes through the accessory hole 320 and is exposed to the outside.

Also, a connection part cap 571 is detachably mounted on the end of the accessory connection part 570. The connection part cap 571 covers the opened end of the accessory connection part 570 to prevent the air from leaking to the outside. A rotation coupling part 572 may be disposed on an end of the accessory connection part 570 to couple the connection cap 571 to the accessory connection part 570. Also, the connection cap 571 may rotate to detach the rotation coupling part 572 from the accessory connection part 570. Also, after the connection cap 571 is separated, an extension hose or other accessories may be simply coupled to the rotation coupling part 572 through rotation manipulation.

Also, a control box mounting part 580 may be disposed above the orifice 521. The control box mounting part 580 may extend backward from a back surface of the housing cover 520 to vertically partition the space in which the heat exchange module 30 is disposed. Thus, a control box 590 for controlling an operation of the dehumidifier 1 may be mounted on the control box mounting part 580.

Here, the control box mounting part 580 may be disposed at a position corresponding to that of the capacitor mounting part 560. Thus, the capacitor 595 may be disposed at the same height as the control box 590 and connected to the control box 590 at the shortest distance.

The heat exchange module 30 is disposed below the control box mounting part 580. The heat exchange module 30 is seated on the horizontal part 620 of the frame 600 and has a size corresponding to a space defined between the control box mounting part 580 and the horizontal part 620.

The heat exchange module 30 is connected to the compressor 20. The heat exchange module 30 may include an evaporator 31 heat-exchanged with air introduced into the dehumidifier 1 and a condenser 32 connected to the evaporator 31 to allow the refrigerant to flow therethrough and heat-exchanged with air passing through the evaporator 31.

The evaporator 31 and the condenser 32 are installed in parallel and disposed in a front/rear direction. Thus, the air heat-exchanged with the refrigerant while passing through the evaporator 31 may be heat-exchanged again with the refrigerant while passing through the condenser 32.

That is, the refrigerant supplied to the compressor 20 may flow toward the condenser 32 through the evaporator via an expansion unit and then be introduced again into the compressor 20. Also, the air suctioned into the dehumidifier 1 may be introduced into the housing assembly 500 via the orifice 521 while successively passing through the evaporator 31 and the condenser 32 and then be discharged again to the outside.

Thus, the indoor air suctioned through the suction hole 331 may be heat-exchanged while passing through the evaporator 31 to decrease in temperature. Thus, moisture contained in the air may be liquefied and separated from the air to generate dehumidified air.

The air separated from the moisture while passing through the evaporator 31 may be heated while passing through the condenser 32 and then dried. The dried air may be discharged into the external space of the dehumidifier 1 through the discharge hole 131 in the state of the dehumidified air from which the moisture is removed.

As described above, since the evaporator 31 and the condenser 32 are arranged in parallel, the air passing through the suction hole 331 may be dehumidified while passing through the evaporator 31 and heated (dried) while passing through the condenser 32.

Also, the moisture separated from the air while passing through the evaporator 31 may be liquefied to change into a liquid state. The phase-changing condensed water may flow along a drain passage 621 defined in the horizontal part 620 of the frame 600 and then be collected into the water tank 800.

Also, a lower end of the condenser 32 may be inserted into the horizontal part 620, and the condensed water may flow via an area on which the condenser is mounted. When at least a portion of the lower end of the condenser 32 is accommodated into the inner space of the drain passage 621, the condenser 32 may be cooled by the condensed water flowing along the drain passage 621 to improve efficiency of the condenser 32.

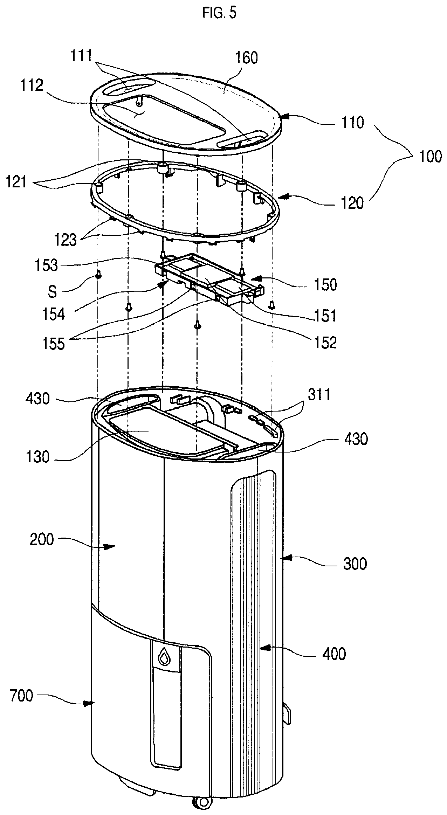

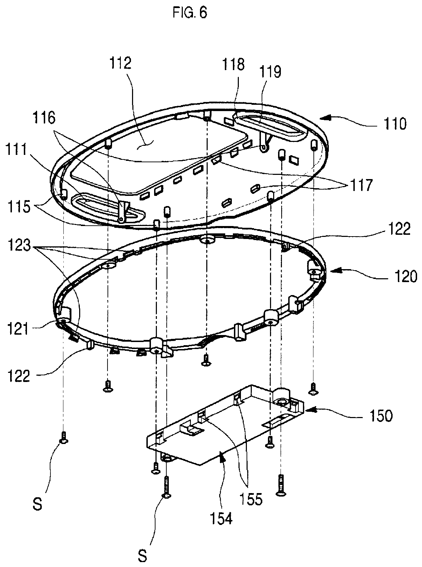

Fig. 5 is an exploded perspective view illustrating a coupling structure between a top cover assembly that is one component of the dehumidifier and a main body. Fig. 6 is an exploded perspective view of the top cover assembly.

The top cover assembly 100 will be described in more detail with reference to referring to Figs. 5 and 6. The top cover assembly 100 may include a cover plate 110 and a cover frame 120.

The cover plate 110 defines an outer appearance of the top surface of the dehumidifier 1. The cover plate 110 may have a plate shape and an oval shape corresponding to the whole shape of the top surface of the dehumidifier 1.

A handle hole 111 in which a handle 40 of the dehumidifier 1 is formed is punched in each of both left and right side of the cover plate 110. The handle hole 111 is configured so that the hand of the user is inserted to grasp both sides of the dehumidifier 1. The handle hole 111 may have a size corresponding to that of an opening 430 of the side deco 400.

Also, a louver mounting hole 112 in which the louver 130 is disposed is defined in the cover plate 110. The louver mounting hole 112 may have a size and shape corresponding to those of the louver 130 in the state where the louver 130 is closed. Thus, a top surface of the louver 130 may cover the louver mounting hole 112 in the state where the louver 130 is closed to form the same plane as the cover plate 110. When the louver 130 is opened, the louver mounting hole 112 may also be opened.

A display part window is disposed at a rear side of the louver mounting hole 112. The display part window may allow the display part 152 to be exposed. The display part window may be opened in a shape corresponding to the display part 152 or be formed of a transparent material to cover the opened portion. Also, a printing part for informing a position of the manipulation part 151 may be further disposed on the cover plate 110 adjacent to the display part window. Thus, the printing part may be touched to manipulate the manipulation part 151.

Cover coupling parts 115 may be disposed to be spaced a predetermined distance from each other along a circumference of a bottom surface of the cover plate 110. The cover coupling part 115 may be a portion to which a screw S passing through the cover frame 120 is coupled. That is, the cover plate 110 may be coupled to the cover frame 120 through the cover coupling part 115.

Also, a cover fixing part 116 coupled to the housing assembly 500 by using the screw S extends downward from each of both sides of a bottom surface of the cover plate 110. The cover fixing part 116 may contact one side of a control box mounting part 580 of the housing cover 520 and be fixed by the screw S to allow the top cover assembly 100 to be fixedly mounted.

A manipulation unit fixing member 117 for fixedly mounting a manipulation unit 150 is disposed on the bottom surface of the cover plate 110 corresponding to the manipulation part 151 and the display part 152. The manipulation unit fixing member 117 has a rib shape. Also, the manipulation unit fixing member 117 may be provided in plurality, and thus the plurality of manipulation unit fixing members 117 may be disposed at a predetermined distance along a circumference of the manipulation unit 150. A hook may be disposed on an end of the manipulation unit fixing member 117 to restrain the circumference of the manipulation unit 150 by the manipulation unit fixing member 117 so that the manipulation unit 150 is fixedly mounted on the back surface of the cover plate 110.

The manipulation unit 150 may include the display unit 152 and the manipulation part 151. A display and a plurality of switches or sensors may be disposed on one PCB 591 to form the display part 152 and the manipulation part 151 so that the user manipulates an operation of the dehumidifier 1 or informs an operation state of the dehumidifier 1 to the outside. Alternatively, the manipulation unit 150 may be constituted by only the manipulation part 151, and the display part 152 may be independently provided as a separate part.

Also, the manipulation unit 150 further includes a board case 154 accommodating the PCB 153. A case hook part 155 in which the manipulation unit fixing member 117 is inserted to pass therethrough and is hooked thereto may be further disposed on a circumference of the board case 154.

A handle hole rib 118 extending downward is disposed along a circumference of the handle hole 111. The handle hole rib 118 may have a shape corresponding to an upper end of the side deco 400 so that the handle hole rib 118 and the upper end of the side deco 400 are coupled to each other to match each other. In detail, a rib stepped part 119 having a stepped portion may be disposed on the handle hole rib 118 to match a deco stepped part 431 disposed on the upper end of the side deco 400. Thus, the side deco 400 may be fixed while being maintained in position on the cover plate 110 to form the handle 40.

A circumference 160 is disposed around a top surface of the cover plate 110. The circumference 160 has an upward protruding shape. Also, the inside of the circumference 160 may have a roundly recessed shape. A chrome line may be printed on the circumference 160 of the cover plate 110 as if a member formed of a separate chrome material is coupled to the cover plate 110. For this, the cover plate 110 may be injection-molded by using an in-mold labeling (IML) manner. That is, the cover plate 110 is injection-molded by using a plastic material. Here, a chrome film may be printed on the circumference 160.

The cover plate 110 molded through the above-described manner may be unnecessary to having a coupling structure of a separate component formed of a chrome material. When the cover plate 110 is molded, the cover plate 110 together with the circumference 160 may be molded at the same time.

To mold the cover plate 110 by using the IML injection manner, the cover plate 110 may have to be simplified in structure. For this, it is necessary to provide a cover frame 120 having a separate coupling structure for coupling the top cover assembly 100 to the front and rear cases 200 and 300.

That is, the top cover assembly 100 may be coupled to the front and rear cases 200 and 300 due to the coupling structure between the cover frame 120 and the cover plate 110. Also, the cover plate 110 may have a simplified structure due to the cover frame 120 coupled to the front and rear cases 200 and 300, and thus, the cover plate 110 may be injection-molded by using the ILM manner.

The cover frame 120 may be mounted on a bottom surface of the cover plate 110 and have a ring shape with a size corresponding to that of the cover plate 110. Frame coupling parts 121 disposed on the bottom surface of the cover plate 110 and spaced a predetermined distance from each other along a circumference of the cover plate 110 are disposed on the cover frame 120.

A screw S for coupling, which is disposed at a position corresponding to each of the cover coupling parts 115, may be coupled to the cover plate 110. Here, the cover coupling part 115 extends downward. The extending cover coupling part 115 may be inserted into the frame coupling part 121.

In this state, when the screw S is coupled upward from a lower side, the screw S may pass through the frame coupling part 121 and then be coupled to the cover coupling part 115. Thus, the cover frame 120 may be fixed to the cover plate 110.

A frame fixing part 122 extending downward and through which the screw S coupled to the housing assembly 500 passes may be disposed on each of both left and right sides of the cover frame 120. The frame fixing part 122 may be configured to be maintained in the state the top cover assembly 100 is fixed to the housing assembly 500.

Also, a plurality of frame fixing hooks 123 may be disposed along a circumference of the bottom surface of the cover frame 120. The top cover assembly 100 may be hooked with top cover coupling parts 311 disposed on the front case 200 and rear case 300 through the frame fixing hooks 123.

Thus, the cover frame 120 may be coupled to the front case 200 and rear case 300. Since the cover frame 120 is coupled to the cover plate 110, the top cover assembly 100 and the front and rear cases 200 and 300 may have structures through which the top cover assembly 100 and the front and rear cases 200 and 300 are coupled and fixed to each other.

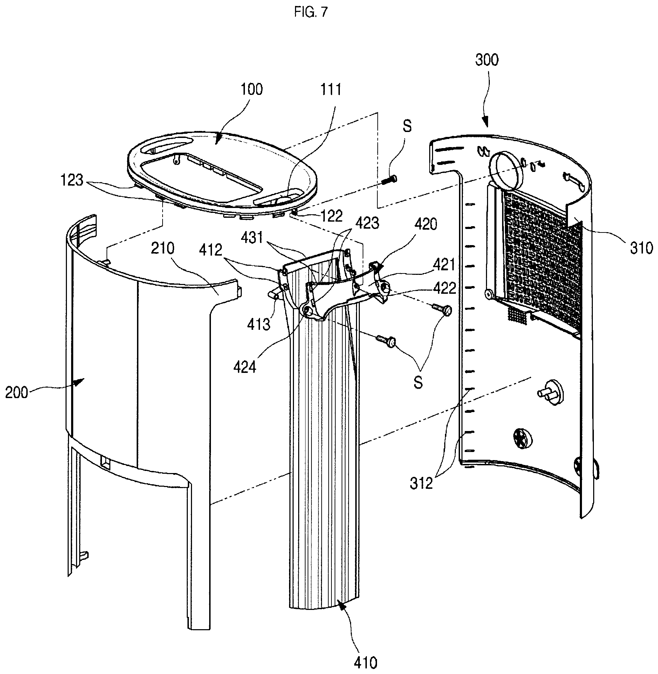

Fig. 7 is an exploded perspective view illustrating a coupling structure of the side deco that is one component of the dehumidifier.

Referring to Fig. 7, the side deco 400 may define a portion of a side surface of the dehumidifier 1. The side deco 400 may be disposed between the top cover assembly 100 and the base pan 11 so that upper and lower ends of the side deco 400 are respectively fixed to the top cover assembly 100 and the base pan 11. Also, the side deco 400 may be disposed between the front case 200 and the rear case 300 so that a front end of the side deco 400 is coupled to the front case 200, and a rear end of the side deco 400 is coupled to the rear case 300.

The side deco 400 may have a vertically long plate shape and includes a deco member 410 and a handle member 420. The deco member 410 may define a side shape of the dehumidifier 1. The deco member 410 has an upper end contacting a bottom surface of the cover plate 110 and a lower end contacting the base pan 11.

Also, the handle member 420 may be coupled to an upper portion of the deco member 410. Also, an upper end of the handle member 420 may be coupled to the cover plate 110 and disposed on an inner side surface of the front extension part 210 and the rear extension part 310 to form the handle 40.

In detail, the deco member 410 may have a rectangular plate shape. Also, a plurality of deco coupling holes may be vertically defined at a predetermined distance in both left and right ends of the deco member 410. Each of the deco coupling holes may have a shape corresponding to that in which each of the deco coupling parts 312 of the front and rear cases 200 and 300 is insertable when the side deco 400 is mounted. Thus, the deco member 410 may be maintained in the state where the deco member 410 is coupled to the front and rear cases 200 and 300. Also, a lower end of the deco member 410 may be inserted into and fixed to the base pan 11, and an upper end of the deco member 410 may be fixed to match the cover plate 110.

An upper portion of the deco member 410 may be rounded inward, and the handle member 420 may be disposed on the upper end of the deco member 410. Both side ends of the deco member 410 and handle member 420 may be coupled to each other to define an opening 430 in a space therebetween. Also, both side ends of the deco member 410 and handle member 420 may be spaced apart from each other by a distance corresponding to the handle hole 111 to form a portion of the handle 40.

To couple the deco member 410 to the handle member 420, a handle coupling protrusion 412 protruding in a direction of the handle member 420 may be disposed on each of both sides of the deco member 410. An end of the handle coupling protrusion 412 may be bent and hooked with the handle member 420.

Also, a deco fixing part 413 extending in a lateral direction may be disposed on each of both sides of the deco member 410. The deco fixing part 413 may be coupled to the handle coupling part 424. Here, the deco fixing part 413 and the handle coupling part 424 may be fixed by the screw S that is coupled to pass through the handle coupling part 424 and the deco fixing part 413.

Both ends of the handle member 420 may be coupled to the deco member 410. Also, each of both ends of the handle member 420 may be rounded to have a curvature corresponding to that of the handle hole 111. Thus, both ends of the handle member 420 may form a space therebetween, into which the user's hand is inserted when the handle member 420 is coupled to the deco member 410.

Also, a round part 421 having a curvature in a vertical direction may be disposed on the handle member 420. The round part 421 may protrude outward toward a lower side thereof so that the user is inserted to grasp an inner surface of the handle member 420. Also, a handle support 422 extending upward to contact the inner surfaces of the front extension part 210 and rear extension part 310 may be further disposed on a lower end of the handle member 420. Thus, even though the user grasps the handle 40, the handle 40 may be stably maintained without being damaged.

Also, a handle coupling hole 423 into which the handle coupling protrusion 412 is inserted may be defined in each of both left and right ends of the handle member 420. The handle coupling hole 423 may be lengthily defined in a vertical direction so that the handle coupling protrusion 412 moves downward after being inserted into the handle coupling hole 423 to restrict the handle member 420 by the handle coupling protrusion 412.

The handle coupling part 424 extending bilaterally may be disposed on each of both left and right ends of the handle member 420. The handle coupling part 424 may be disposed at a position corresponding to the deco coupling part 413, and the screw S may pass through the handle coupling part 424. Also, the handle support 422 surrounding and supporting the deco coupling part 413 may protrude from the handle coupling part 424. Thus, when the handle member 420 and the deco member are coupled to each other, the handle support 422 may be disposed to be closely attached to the deco coupling part 413. Thus, a screw S may be coupled to an exact location.

The handle member 420 may have a vertical width corresponding to the front extension part 210 and the rear extension part 310. Also, the lower end of the handle member 420 may have a round part with a curvature corresponding to that of a lower end of each of the front extension part 210 and the rear extension part 310. Thus, when the front case 200 and the rear case 300 are coupled to each other, the handle 40 may be stably formed without being exposed to the outside.

Also, the handle member 420 and the deco member 410 may be coupled to each other to allow the upper end of the side deco 400 to form the opening 430. The opening 430 has a shape corresponding to that of the handle hole 111. Also, the opened circumference of the handle hole 111 may extend to be rounded downward. The rib stepped part 119 is disposed on a lower end of the handle hole 111. Also, the deco stepped part 431 may be disposed on the upper end of each of the deco member 410 and the handle member 420, which corresponds to the rib stepped part 119 may be disposed so that the deco stepped part 431 and the rib stepped part 119 match each other.

Thus, the coupling structure between the front case 200 and the rear case 300 and between the side deco 400 and the cover plate 110 may provide the stable handle structure as well as the fixing of the side deco 400.

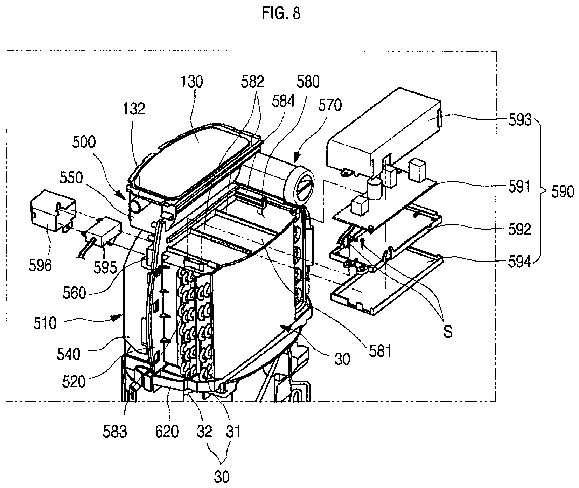

Fig. 8 is an exploded perspective view illustrating a coupling structure of a PCB assembly that is one component of the dehumidifier.

Referring to Fig. 8, when the control box mounting part 580 is disposed on the housing assembly 500, the control box 590 is mounted on the control box mounting part 580. The control box mounting part 580 may be disposed at a rear side of the louver 130 mounted on the housing assembly 500 to form a seating surface 581 that extends backward.

Also, a pair of ribs 582 protruding upward is disposed on the seating surface 581. Each of the ribs 582 lengthily extend in a front/rear direction to support a lower portion of the control box 590.

Also, a box fixing part 583 protrudes from one side of the seating surface 581. The box fixing part 583 may be disposed at a position corresponding to a box coupling part that extends laterally from one side of the control box 590. The screw S may pass through the box coupling part and then be coupled to fix the control box 590.

A box guide 584 is disposed on one side facing the box fixing part 583. The box guide 584 is lengthily disposed in a front/rear direction so that a guide piece of the control box 590 is slidably inserted.

That is, when the control box 590 is mounted, the guide piece of the control box 590 may move backward and be inserted into the box guide 584. When the control box 590 completely moves, the box coupling part may be disposed at a position that overlaps the box fixing part 583. In this state, the screw S may be coupled from an upper side to fixedly mount the control box 590 on the control box mounting part 580.

On the other hand, if a service for the control box 590 is required, the coupling of the screw S may be released, and then the control box 590 may be slid backward to easily separate the control box 590.

The control box 590 includes the PCB 591 on which various devices for controlling the operation of the dehumidifier 1 are mounted, a board base 592 formed of a plastic material to accommodate the PCB 591, and a board case surrounding upper and lower portion of the board base 592.

The board base 592 defines a space in which the PCB 591 is accommodated. The box coupling part and the guide piece protrude outward from both ends of the board base 592, respectively.

Also, the board case 154 includes an upper case 593 and a lower case 594. The board base 592 in which the PCB 591 is accommodated may be mounted in a space between the upper case 593 and the lower case 594. The board case 154 is formed of a metal material such as stainless steel. Even though fire occurs in the PCB 591, the combustion may occur only within the board case 154 to prevent the fire from being spread to other component of the dehumidifier 1.

The capacitor mounting part 560 is further disposed at a font side of the control mounting part 580. The capacitor mounting part 560 is disposed adjacent to the control box mounting part 580. Also, the capacitor 595 is accommodated into the capacitor cover 596 having an accommodation space therein. The capacitor cover 596 may be coupled to the capacitor mounting part 560.

Thus, the capacitor 595 may be fixed to the capacitor mounting part 560. The capacitor cover 596 formed of a metal material such as stainless steel may completely surround the capacitor 595 to protect the capacitor 595 against the fire.

The capacitor 595 may have a relatively high height. Thus, if the capacitor 595 increases in capacitance, the capacitor may further increase in size. Thus, since the capacitor 595 and the capacitor cover 596 are separated from the control box, the mounting space of the control box 590 may be more utilized, and also the inner space of the dehumidifier 1 may be efficiently used.

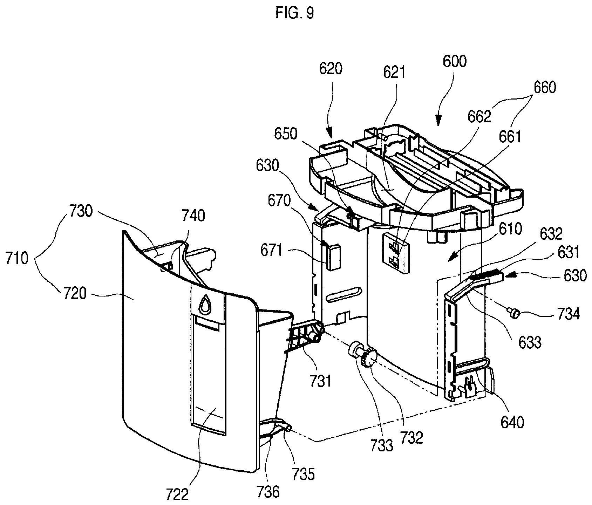

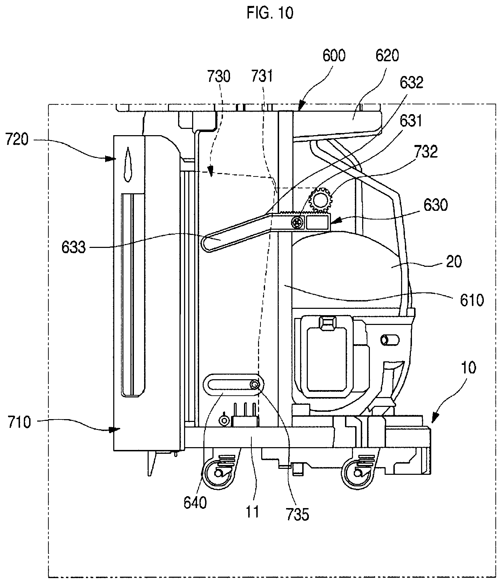

Fig. 9 is an exploded perspective illustrating a coupling structure of a tank drawer that is one component of the dehumidifier. Fig. 10 is a side view illustrating a structure of a guide assembly for guiding insertion/withdrawal of the water tank assembly.

Referring to Figs. 9 and 10, the water tank assembly 700 is disposed at a front side of the vertical part 610 of the frame 600. A space in which a tank drawer 710 constituting the water tank assembly 700 is accommodated is defined in the front side of the vertical part 610. When the water tank 800 is completely inserted, the tank drawer 710 may disposed on the same plane as a front surface of the cover plate 110.

A latch 650 into which the locker 721 is inserted to selectively restrict the locker 721 is disposed on a central portion of the front surface of the frame 600, particularly, a front end of the horizontal part 620. The latch 650 is disposed at a position corresponding to the latch hole 222. When the tank drawer 710 is closed, the latch 650 is hooked with the locker 721 to maintain the closed state of the tank drawer 710.

Here, when the latch 650 is inserted once, the latch 650 is hooked with the locker 721. When the locker 721 moves again forward by an external force, the hooking between the latch 650 and the locker 721 may be released to allow the tank drawer 710 to be withdrawn. That is, the hooking structure between the latch 650 and the locker 721 may be similar to a latching structure such as a general pushing manner.

The locking unit including the latch 650 and the locker 721 may have a locking structure different from the structures of the latch 650 and the locker 721. Also, various structures for maintaining the closed state of the tank drawer 710 may be selectively applied.

A full level detection part 660 is disposed on the front surface of the vertical part 610 toward the tank drawer 710. A pair of sensors are vertically disposed on the full level detection part 660 to determine a full level of water by detecting a position of a floater of the water tank 800.

When a position of the floater 830 is detected by the sensor for detecting the full level of the water tank 800, the lower water level sensor 661 of the pair of sensors transmits a full level signal to the display part 152 to inform the full level of the water tank 800.

Also, when a position of the floater is detected by an upper safety sensor 662 of the pair of sensors, the operation of the dehumidifier 1 may be stopped to prevent the condensed water from being further collected into the water tank 800. Also, the full level may be informed to the outside to allow the user to empty the water tank 800.

Also, a lighting module 670 is mounted on one side of the vertical part 610 corresponding to a lateral side of the tank drawer 710. The lighting module 670 irradiates light into the water tank 800 to visualize a water level of the water tank 800 and function as an indirect lighting. Thus, the light may be irradiated form one side toward the inside of the water tank 800.

For this, although not shown, a lighting hole 671 may be defined in a side surface of the tank drawer 710 or a position corresponding to the lighting module 670 to emit light into the water tank 800 in a state where the water tank 800 is accommodated into the tank drawer 710.

Also, the main guide 630 and the sub guide 640 are disposed on both left and right sides of the vertical part 610, respectively. The main guide 630 and the sub guide 640 may guide the slidable insertion/withdrawal and tilting of the tank drawer 710. The main guide 630 and the sub guide 640 may be disposed on both left and right sides of the vertical part 610. Here, the sub guide 640 may be disposed below the main guide 630.

The main guide 630 may be disposed on each of both sides of the vertical part 610 and also be disposed above the sub guide 640. The main guide 630 may include a horizontal part and a rotation part 632. Thus, the main guide 630 may guide horizontal movement of the tank drawer 710 and then guide rotation of the tank drawer 710.

A top surface of the horizontal part 631 may have a rack gear shape and be engaged with a pinion gear 732 that will be described below. Also, the horizontal part 631 may extend in a front/rear direction to guide the horizontal movement of the tank drawer 710.

Also, the rotation part 632 may extend to be tilted or rounded from a front end of the horizontal part 631 at a predetermined angle. Also, a rotation guide hole 633 may be defined in a center of the rotation part 632. The rotation guide hole 633 may extend along a portion of a front portion of the horizontal part 631 and the rotation part 632. A guide member 734 that will be described below may be inserted into the rotation guide hole 633.

Thus, when the tank drawer 710 moves forward, the pinion gear 732 may move in a state where the pinion gear 732 is gear-coupled to the rack gear disposed on a top surface of the horizontal part 631. Here, the guide member 734 may move along the rotation guide hole 633. Also, after the tank drawer 710 is withdrawn forward, the tank drawer 710 may rotate by the center of gravity. The guide member 734 may guide the rotation of the tank drawer 710 while moving along the rotation guide hole 633.

The sub guide 640 may be disposed on each of both sides of the vertical part 610 and also be disposed below the main guide 630. The sub guide 640 may guide movement of a lower portion of the tank drawer 710 when the tank drawer 710 moves. That is, the sub guide 640 may guide the tank drawer 710 so that the tank drawer 710 is more stably withdrawn. The sub guide 640 may extend in a front/rear direction, and a rotation protrusion 735 that will be described below may be inserted into the sub guide 640. Thus, the sub guide 640 may guide the forward/backward movement of the rotation protrusion 735.

The water tank assembly 700 may collect condensed water generated in the heat exchange module 30. The water tank assembly 700 is disposed in a space defined in a front side of the frame 600. The water tank assembly 700 is connected to the frame 600 and slid to be inserted or withdrawn in a front/rear direction. When the water tank assembly 700 is completely withdrawn, the water tank assembly may rotate by using a lower portion thereof as a shaft and then be tilted to open a top surface thereof.

The water tank assembly 700 may include a water tank 800 for storing the condensed water and the tank drawer 710 in which the water tank 800 is accommodated and inserted/withdrawn so that the water tank 800 is easily mounted or separated.

The tank drawer 710 may define an outer appearance of a front surface of the water tank assembly 700. The water drawer 710 may include a front surface part 720 defining a portion of the front surface of the dehumidifier 1, i.e., a portion of the front case 200 and an accommodation part 730 opened upward from a rear side of the front surface part to accommodate the water tank downward from an upper side.

The accommodation part 730 may have a shape corresponding to that of the water tank 800. The accommodation part 730 may be opened upward so that water is easily supplied, and the water tank 800 is easily inserted or withdrawn in the state where the water tank 800 is mounted.

The locker 721 extending backward is disposed on a central portion of an upper end of the front surface part 720. The locker 721 may extend backward and be coupled and fixed to the latch 650 in a state where the water tank assembly 700 is completely inserted.

Also, an identification hole 722 for identifying a water level of the water tank 800 mounted on the accommodation part 730 through a naked eye may be further disposed in one side of the front surface part 720. The identification hole 722 is lengthily disposed in a vertical direction. Also, the identification hole 722 may be disposed so that at least a portion of the water tank 800 is exposed.

Thus, when the light is irradiated into the water tank 800 by the lighting module 670, the light irradiated into the water tank 800 may be identified through the identification hole 722 from the outside.

A detection hole 740 for detecting a water level is opened in a rear surface of the accommodation part 730. The detection hole 740 is opened in a shape corresponding to that of the full level detection part 660. Thus, the full level or dangerous level within the water tank 800 may be easily detected through the detection hole 740.

An upper extension part 731 and lower extension part 736, which extend backward may be provided in a pair on both sides of the accommodation part 730. The upper extension part 731 may extend upward from the accommodation part 730, and the lower extension part 736 may extend backward from the lowest portion of the accommodation part 730.

The upper extension part 731 may further extend backward from the lower extension part 736, and the guide member 734 and the pinion gear 732 may be disposed on the upper extension part 731.

The guide member 734 may protrude from a corresponding position so that the guide member 734 moves along the rotation guide hole 633 of the main guide 630. To smoothly move the tank drawer 710, a roller may be coupled to an end of the guide member 734. Here, the roller may be rolled along the rotation guide hole 633.

The pinion gear 732 may be disposed on a rear end of the upper extension part 731. The pinion gear 732 may be gear-coupled to the rack gear of the horizontal part 631. The pinion gear 732 may rotate when the tank drawer 710 moves in the front/rear direction. The tank drawer 710 may not move in a horizontal direction, but be stably inserted or withdrawn by the pinion gear 732.

Also, to rotate the pinion gear 732, a driving motor 733 may be further provided on the upper extension part 731. The driving motor 733 may be connected to a rotation shaft of the pinion gear 732. Thus, the pinion gear 732 may forwardly or reversely rotate by driving manipulation of the driving motor 733, and thus, the tank drawer 710 may be inserted or withdrawn in the front/rear direction. For this, the driving motor 733 may be manipulated in operation by the manipulation part 151.

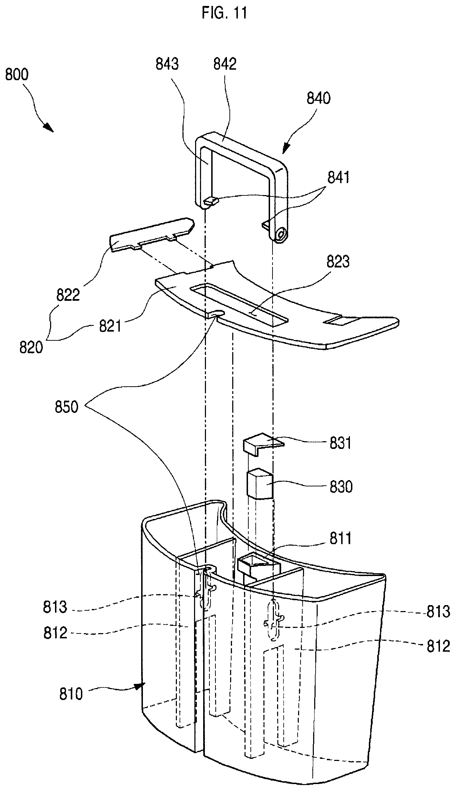

Fig. 11 is a perspective view of a water tank that is one component of the dehumidifier.

Referring to Fig. 11, the water tank 800 may have a shape corresponding to an inner shape of the accommodation part 730. The water tank 800 may include a lower transparent water collection part 810 and an upper water collection part cover 820.

In detail, the water collection part 810 may be formed of a transparent acrylic or plastic material so that the inside of the water tank 800 is seen from the outside, and the water collection part 810 is easily molded. A floater accommodation part 811 for accommodating the floater 830 is disposed inside the water collection part 810. The floater accommodation part 811 may be opened upward and define an independent space. Also, the floater accommodation part 811 lengthily disposed in a vertical direction to secure a moving path of the floater 830 and maintain the same water level as the inside of the water tank 800. The floater 830 is accommodated into the floater accommodation part 811. The floater 830 may vertically move according to a water level.

Here, the floater accommodation part 811 may be disposed at a position corresponding to the full level detection part 660. Thus, a position of the floater 830 which includes a magnet therein and moves along the floater accommodation part 811 may be detected by a sensor of the full level detection part 660. The opened top surface of the floater accommodation part 811 may be covered by the floater cover 831 to prevent the floater 830 from being lost and locate the floater 830 within the floater accommodation part 811.

A pair of handle mounting part 812 is disposed within the water tank 800. A tank handle 840 to be grasped by the user to move the water tank 800 may be disposed on the handle mounting part 812. A mounting hole 813 lengthily defined in a vertical direction may be defined in the handle mounting part 812.

A mounting protrusion 841 of the tank handle 840 has a structure that is inserted into the mounting hole 813. The tank handle 840 may vertically move along the mounting hole 813. Thus, when the user separates or move the water tank 800, the tank handle 840 may be withdrawn upward. When the water tank 800 is mounted on the water drawer 710, the tank handle 840 may move downward to insert the water handle 840 into the water collection cover 820.

The water collection cover 820 may cover the opened top surface of the water collection part 810. The water collection cover 820 may includes a cover part 821 covering the top surface of the water collection part 810 and an opening part 822 rotatably disposed on one side of the cover part 821 to open a portion of the top surface of the water collection part 810.

Thus, when the water filled into the water collection part 810 is discarded, the opening part 822 may rotate to discard the water within the water collection part 810, or the water collection cover may be separated to discard the water.

A handle hole 823 is defined in the water collection cover 820. The handle hole 823 may have a size corresponding to a horizontal size of the tank handle 840 to define a passage through which the tank handle 840 is inserted or withdrawn.

The tank handle 840 may include a grasping part 842 to be grasped by the user and an extension part 843 extending downward from each of both ends of the grasping part 842. A mounting protrusion 841 protruding inward may be disposed on a lower end of the extension part 843. The mounting protrusion 841 may vertically move along the mounting hole 813 defined in the water collection part 810.

When the tank handle 840 is not used, the tank handle 840 may move downward. In the state where the tank handle 840 is completely inserted, the tank handle 840 may be inserted so that a top surface of the tank handle 840 is disposed on the same plane as a top surface of the water collection cover 820.

A locker groove 850 recessed backward may be lengthily defined in a vertical direction in each of centers of the water collection part 810 and the water collection part cover 820. When the water tank 800 is mounted, the locker 721 may be inserted into the locker groove 850. That is, the locker may be inserted into the locker groove 850 in the state where the water tank is mounted on the accommodation part 730 to prevent the water tank 800 from moving. Also, when the water tank 800 is inserted or withdrawn, the locker 721 may move along the locker groove 850.

Hereinafter, an operation of the dehumidifier having the above-described structure will be described.

First, to operate the dehumidifier 1, the user may locate the dehumidifier 1 in a space to be dehumidified. Since the dehumidifier 1 includes the wheel 12 on the bottom surface thereof and the handle 40 on both sides of the top surface thereof, the dehumidifier 1 may easily move even though the dehumidifier 1 has a large size.

The user may insert a hand thereof into the handle hole 111 defined in the top surface of the cover plate 110 to grasp the handle 40 through the space defined in a side of the side deco 400, thereby stably moving the dehumidifier 1.

When the dehumidifier 1 is placed on a specific position, the user manipulates the dehumidifier 1 to drive the dehumidifier 1. As the dehumidifier 1 is manipulated, the compressor 20 and the motor 530 operate, and the louver 130 rotates to expose the discharge hole 131 to the outside.

As the compressor 20 operates, the refrigerant flows through a refrigerant cycle. Here, the compressor 20 may discharge a high-temperature high-pressure liquid refrigerant. The evaporator 31 may be cooled by low-temperature cool air introduced into the evaporator 31 via the expansion unit. Also, the refrigerant that is heat-exchanged with the external air in the evaporator 31 to changes in phase may flow toward the condenser 32. Then, the refrigerant may be heat-exchanged again in the condenser 32 to return to the compressor 20. Thus, the evaporator may be continuously cooled, and the condenser 32 may be heated due to the above-described refrigerant cycle.

The blowing fan 540 may rotate by the operation of the motor 530. Thus, since the blowing fan 540 rotates, air of an indoor space in which the dehumidifier 1 is disposed may be forcibly suctioned into the dehumidifier 1 through the suction hole 331.

The suctioned air may pass through the evaporator 31. While the air passes through the evaporator 31, moisture contained in the air may be condensed while being heat-exchanged with the evaporator 31 to flow along the evaporator 31. Also, the air passing through the evaporator 31 may pass through the condenser 32. Then, the air heated by the condenser 32 may change into dried air and then be introduced into the orifice 521.

The air introduced into the orifice 521 may flow along the inner wall of the housing case 510 by the blowing fan 540 and be discharged again into the indoor space through the louver 130.

This process may be repeatedly performed until the humidity of the indoor space reaches a preset humidity or according to the user's set. Here, generated condensed water of the evaporator 31 may be introduced into the water tank 800 through the drain passage 621 defined in the horizontal part 620 of the frame 600. The condensed water introduced into the water tank 800 may be collected into the water collection part 810. Here, the condensed water may be continuously collected until reaching a preset water level.

When an amount of water collected into the water tank 800 increases to reach the preset water level, the floater 830 may move upward. Here, when a position of the floater 830 is detected by the water level sensor 661, the full level state may be informed by using the display part 152 so that the user discards the water within the water tank 800. Also, when a position of the floater 830 is detected by the safety sensor 662, the operation of the dehumidifier 1 may be stopped to prevent the water within the water tank 800 from overflowing.

The lighting module 670 may operate by the user's manipulation or set during the operation of the dehumidifier 1. When the lighting module 670 operates, the water tank 800 may emit light such as an indirect lighting so that the water level of the water collected into the water tank 800 is easily identified from the outside.

A case in which the water tank reaches a full level, or water within the water tank has to be discarded will be described in detail with reference to the drawings.

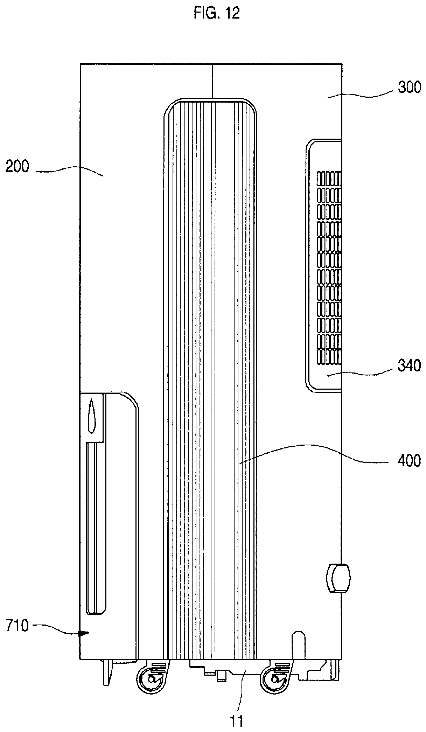

Fig. 12 is a side view of the dehumidifier before the water tank assembly is withdrawn.

Referring to Fig. 12, before the dehumidifier 1 normally operates to reach the full level of the water tank 800, the tank drawer 710 may be maintained in the closed state. In the tank drawer 710 is closed, the front surface of the tank drawer 710 may be disposed on the same plane as the front case 200 to realize a sense of unity.

In this state, the guide member 734 may be disposed in a rear portion of the main guide hole 633 of the main guide 630. Here, the pinion gear 732 may be maintained in the state in which the pinion gear 732 is engaged with the rack gear at a rear portion of the top surface of the horizontal part 631. Also, the rotation protrusion 735 may be disposed at the rearmost position of the sub guide 640.

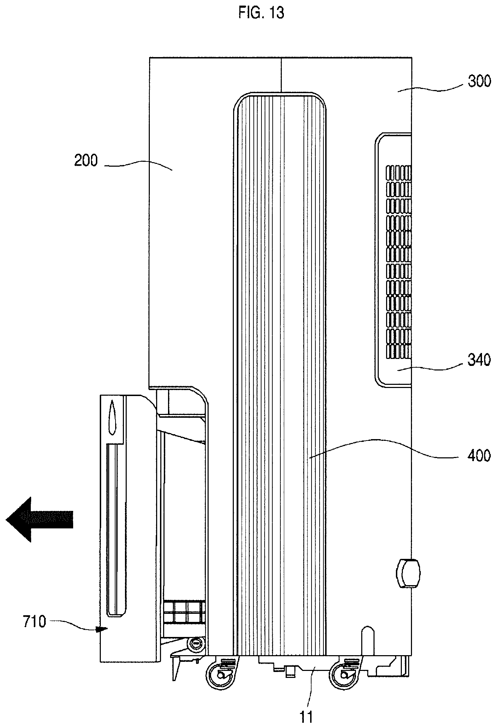

Fig. 13 is a side view of the dehumidifier in the state where the water tank assembly is withdrawn. Fig. 14 is a side view of the guide assembly in the state where the water tank assembly is withdrawn.

As illustrated in Figs. 13 and 14, the manipulation part 151 may be manipulated to open the tank drawer 710. The driving motor 733 may rotate by the manipulation of the manipulation part 151. Also, the pinion gear 732 may move forward along the horizontal part 631 of the main guide 630 by the rotation of the driving motor 733.

As the pinion gear 732 moves, the tank drawer 710 may be opened while horizontally moving forward.

Here, the guide member 734 may move along the sub guide 640. Then, when the tank drawer 710 completely moves to the front side, the guide member 734 may be disposed on a front end of the sub guide 640.

The forward movement of the tank drawer 710 may be performed by releasing the restriction of the latch 721 and locker 650 without using a separate driving motor. Here, a tilted part 737 formed on the bottom surface of the tank drawer 710 may contact the base roller 13. Thus, the base roller 13 may be rolled along the tilted part 737 by the weight of the water tank 800, and the water tank 800 may move forward by the self-weight thereof.

In the state where the tank drawer 710 completely moves to the front side, the tank drawer 710 may be in a state where the center of gravity of the tank drawer 710 moves forward by the weight of the water tank 800. Also, in the state where the tank drawer 710 moves forward, a portion of the top surface of the water tank 800 may be exposed to the outside.

As described above, the tank drawer 710 may be slidably withdrawn forward till the state of Figs. 13 and 14.

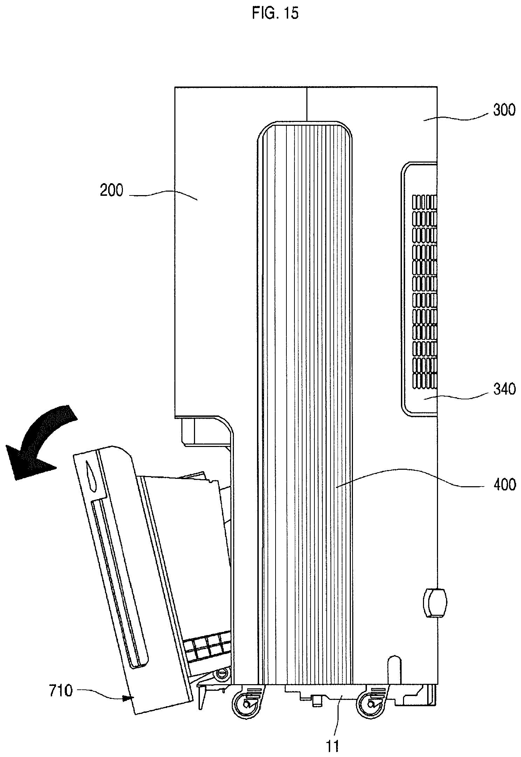

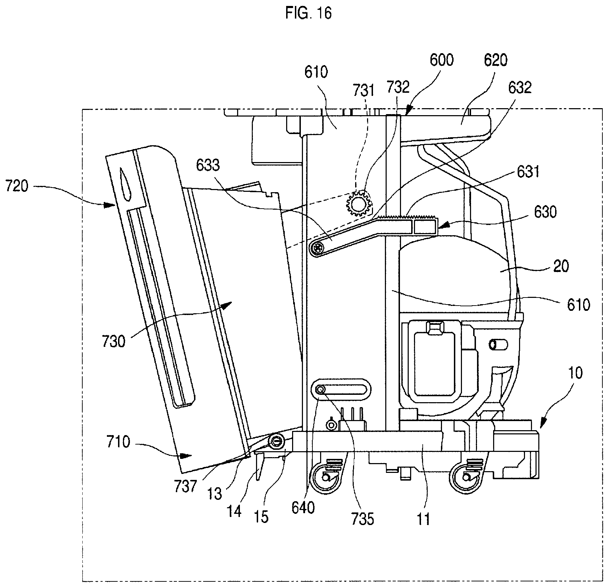

Fig. 15 is a side view of the dehumidifier in a state where the water tank assembly is tilted after being withdrawn. Fig. 16 is a side view of the guide assembly in the state where the water tank assembly is tilted after being withdrawn.

As illustrated in Figs. 15 and 16, in the state where the tank drawer 710 is completely withdrawn, the center of gravity of the tank drawer 710 may be disposed at a front side by the weight of the water tank 800. In this state, the tank drawer 710 may generate moment that rotates with respect to the rotation protrusion 735.

Here, the tank drawer 710 may rotate, and the guide member 734 may move along the rotation guide hole 633. That is, the tank drawer 710 may rotate by using the rotation protrusion 735 as an axis. Thus, as the tank drawer 710 rotates, the top surface of the water tank 800 may be exposed upward.

In the tank drawer 710 is completely tilted by the rotation thereof, the tank drawer 710 may become to the state illustrated in Figs. 15 and 16. Here, each of the guide member 734 and the rotation protrusion 735 may be disposed at the foremost position of the rotation guide hole 633 and the sub guide 640, respectively.

Even though the tank drawer 710 is completely slid and withdrawn and is tilted, the main body of the dehumidifier 1 may not fall forward by a main body support 14 that extends downward from a front end of the base plate 11. Thus, the tank drawer 710 may be stably inserted and withdrawn, and also, the water tank 800 may be stably detached.

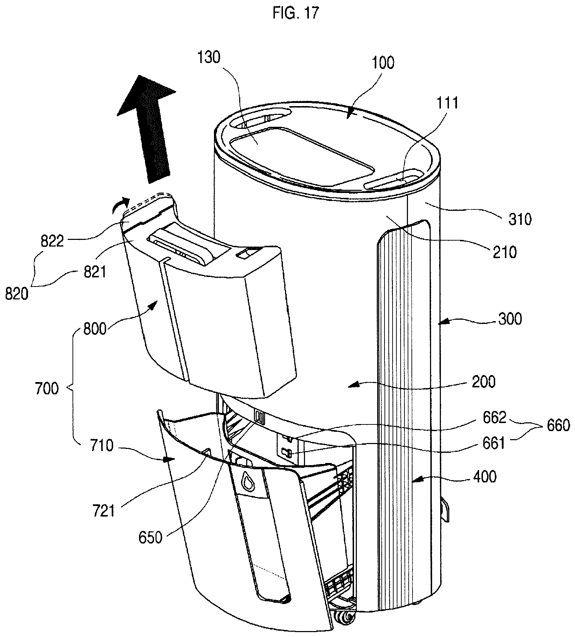

Fig. 17 is a perspective view illustrating a state in which the water tank is separated from the water tank assembly.

Referring to Fig. 17, when the tank drawer 710 is completely tilted, the water tank 800 may be withdrawn from the accommodation part 730. Thus, the water tank 800 may be separated from the accommodation part 730, and the opening part 822 of the water tank 800 may rotate to discard the water within the water tank 800.

Here, to easily separate and move the water tank 800, the tank handle 840 may be withdrawn upward. Thus, the user may separate or move the water tank 800 while grasping the tank handle 840.

A refrigerator according to the present disclosure may be described according to various embodiments.

According to another embodiment, a tank drawer may be slidably inserted and withdrawn by a guide rail and have a structure that is tiltable by a drawer frame.

The current embodiment is equal to the foregoing embodiment except for the guide rail and the drawer frame, and thus the same part will be designated by the same reference numeral, and detailed descriptions thereof will be omitted.

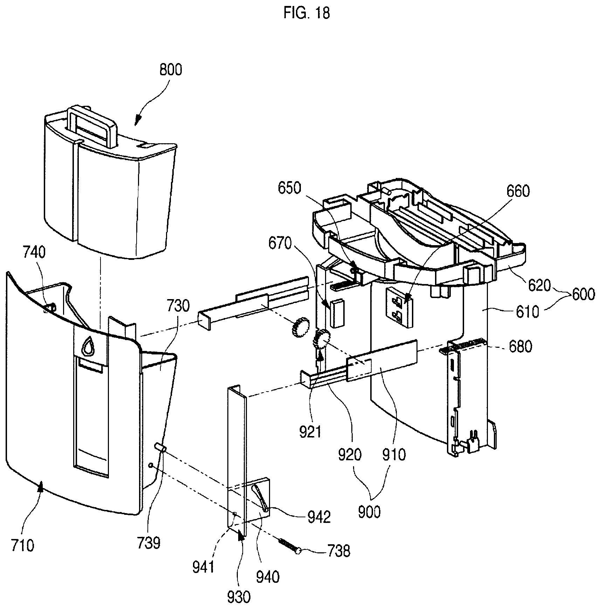

Fig. 18 is an exploded perspective illustrating a coupling structure of a tank drawer that is one component of a dehumidifier according to another embodiment.

Referring to FIG. 18, the inside of a dehumidifier 1 according to another embodiment may be divided into a front space in which a water tank 800 is accommodated and a rear space in which a compressor 20 is accommodated by a vertical part 610 of a frame 600. Also, the inside of the dehumidifier 1 may be divided into an upper space in which a housing assembly 500 for accommodating a heat exchange module 30 and a blowing fan 540 is provided and a lower space in which the water tank 800 is accommodated by a horizontal part 620 of the frame 600.

The water tank 800 may be accommodated into a tank drawer 710 that is opened upward. When the tank drawer 710 is inserted or withdrawn, the water tank 800 may be inserted or withdrawn together with the tank drawer 710. Also, the water tank 800 may be detached through an opened top surface of the tank drawer 710.

A full level detection part 660 may be disposed on a front surface of the vertical part 610 that defines the space in which the water tank 800 and the tank drawer 710 are accommodated, and a lighting module 670 may be disposed on a side surface of the vertical part 610 to illuminate the inside of the water tank 800.

A guide rail 900 may be disposed on each of both inner sides of the frame 600. The guide rail 900 may have one end that is fixed to each of both side surfaces of the vertical part 610 of the frame 600 and the other end that is fixed to the drawer frame 930 on which the tank drawer 710 is mounted. Thus, the guide rail 900 may be slidably inserted and withdrawn in multi stages. Also, the tank drawer 710 may slidably move in a front/rear direction by the guide rail 900 and then be inserted and withdrawn.

The guide rail 900 may include a fixed rail 910 fixed to the frame 600 and a movable rail 920 that moves along the fixed rail 910. The movable rail 920 may have a front end fixed to the tank drawer 710 and a rear end on which a pinion gear 921 is disposed.

Also, a guide rack 680 may be disposed under the fixed rail 910. The guide rack 680 may lengthily extend in the front/rear direction and be gear-coupled to the pinion gear 921. The guide rack 680 may protrude from the inner surface of the frame 600. When the guide rail 900 is mounted, the guide rack 680 may be gear-coupled to the pinion gear 921. Thus, when the tank drawer 710 slidably moves, the pinion gear 921 may move along the guide rack 680.

A drawer frame 930 may be disposed on each of both left and right sides of the tank drawer 710. The drawer frame 930 may be lengthily disposed in a vertical direction and coupled to the front end of the guide rail 900. Also, a lower portion of each of both left and right surfaces of the tank drawer 710 may be rotatably coupled to the drawer frame 930 to support the tank drawer 710.

Also, a tilting guide 940 may be disposed on a lower portion of the drawer frame 930. The tilting guide 940 may have a plate shape. The tilting guide 940 may have a coupling hole 941 in which a rotation shaft 738 of the tank drawer 710 is inserted and fixed and a tilting guide hole 942 for guiding the tilting of the tank drawer 710.

The rotation shaft 738 of the tank drawer 710 may be disposed on both left and right surfaces of the tank drawer 710. Also, the rotation shaft 738 may protrude to pass through the coupling hole 941. Also, in the state where the water tank 800 is mounted, a center of gravity of the tank drawer 710 may defined at a front side to generate moment on the tank drawer 710 around the rotation shaft 738. Also, when the tank drawer 710 is withdrawn due to the inertia by which the tank drawer 710 is withdrawn, the tank drawer 710 may be tilted.

Also, a guide protrusion 739 protruding from both left and right sides of the tank drawer 710 that is away from the rotation shaft 738 may be accommodated into the tilting guide 940. An arc shape formed along a moving trace of the tilting guide 940 when the tank drawer 710 rotates may be formed to guide the movement of the tilting guide 940.

A locker 650 for restricting the tank drawer 710 may be further disposed on an upper portion of the frame 600. Also, a latch 721 may be disposed on a back surface of the front surface of the tank drawer 710, which corresponds to the locker 650. Thus, the tank drawer 710 may be restricted in the closed state and then maintained in the closed state. The locker 650 and the latch 721 may push the tank drawer 710 to release the restriction of the tank drawer 710. Also, the locker 650 and the latch 721 may be pushed to determine the restriction and release of the tank drawer 710.

Hereinafter, a process for inserting and withdrawing the water tank of the dehumidifier having the above-described structure according to another embodiment will be described.

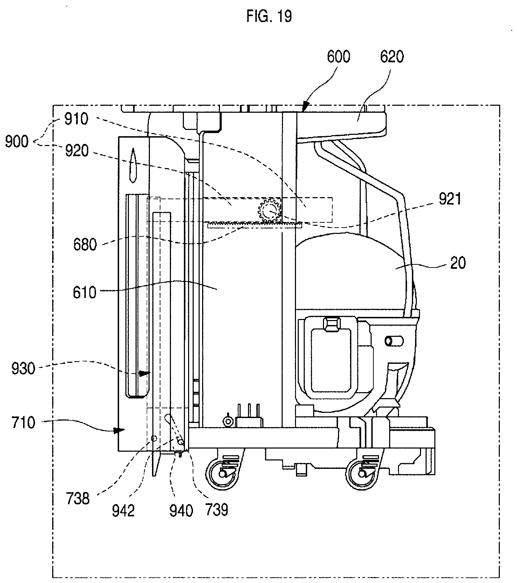

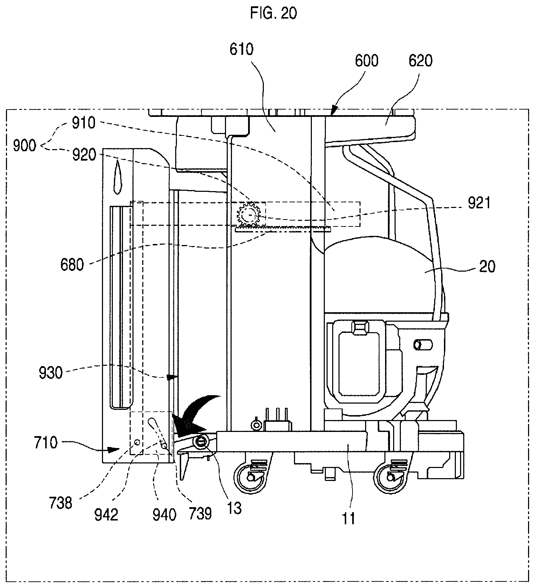

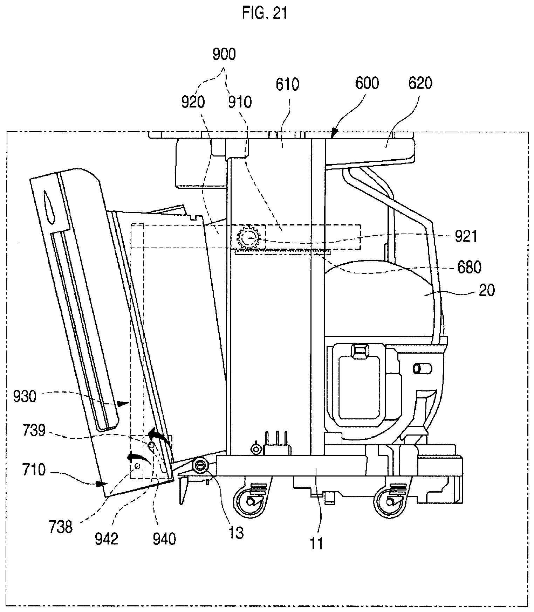

Fig. 19 is a side view of a guide assembly before a water tank assembly that is one component of the dehumidifier according to another embodiment. Fig. 20 is a side view of the guide assembly in the state where the water tank assembly is withdrawn. Fig. 21 is a side view of the guide assembly in the state where the water tank assembly is tilted after being withdrawn.

Referring to Figs. 19 to 21, when the dehumidifier 1 is operating, or the water tank does not reach a full level, the tank drawer 710 may be maintained in the closed state as illustrated in Fig. 19.

In the state where the tank drawer 710 is closed, the guide rail 900 may be completely inserted, and the pinion gear 921 may be disposed at the rearmost position of the guide rack 680. Also, the latch 721 and the locker 650 may be restricted with respect to each other to maintain the closed state of the tank drawer 710. Also, the guide protrusion 739 may be disposed at the lowermost portion of the tilting guide hole 942.

In this state, the locker 650 and the latch 721 may be released in restriction to open the tank drawer 710 so that the water tank 800 reaches the full level to discard the water of the water tank 800. Here, the tank drawer 710 may move forward by a repulsive force that is generated when the restriction between the locker 650 and the latch 721 is released. Alternatively, like the foregoing embodiment, the tank drawer 710 may move forward by the contact between the tilted part 737 and the roller 15 and the self-weight thereof.

The tank drawer 710 may move forward by a predetermined distance. Here, when the movable rail 920 is fully withdrawn forward, the tank drawer 710 may become to the state illustrated in Fig. 20. In this state, the pinion gear 921 may move up to a front portion of the guide rack 680, and the top surface of the tank drawer 710 may be opened somewhat.

In this state, the center of gravity of the tank drawer 710 may move forward, and thus, the tank drawer 710 may rotate about the rotation shaft 738. Here, the guide protrusion 739 may move along the tilting guide hole 942.

When the tank drawer 710 is completely tilted, the guide member may be disposed on an upper end of the tilting guide hole 942 as illustrated in Fig. 21. Then, the top surface of the tank drawer 710 may be fully opened to allow the water tank 800 to be easily inserted and withdrawn. In this state, the user may separate the water tank 800 from the tank drawer 710 and then withdraw the water tank 800. Then, the water within the water tank 800 may be discarded, and the water tank 800 may be mounted again.

Even though the tank drawer 710 is completely slid and withdrawn and is tilted, the main body may not fall forward by a main body support 14 that extends downward from a front end of the base plate 11. Thus, the tank drawer 710 may be stably inserted and withdrawn, and also, the water tank 800 may be stably detached.

After the water tank 800 is mounted, the tank drawer 710 may reversely rotate again through processes that are reversely performed with respect to the above-described processes. Then, the tank drawer 710 may be closed to allow the dehumidifier 1 to become to the operable state.

In the dehumidifier according to the embodiments, the tank drawer in which the water tank is accommodated may be slid by a predetermined distance and then tilted. Thus, the water tank may rotate without being spatially limited to minimize the loss of the space in which the water tank is accommodated or the space of the main body.

Also, when the tank drawer is withdrawn, the tank drawer may be slidably withdrawn by the self-weight of the water tank and then tilted to allow the user to easily withdraw the water tank.

Particularly, in the case of the dehumidifier having large capacity, although it is difficult to withdraw and separate the water tank due to the heavy water tank, it may be unnecessary to perform a separate withdrawing operation for slidably withdrawing the water tank due to the self-weight of the water tank. Also, since the upper portion of the water tank is maximally opened, the water tank may be easily withdrawn.

In addition, when the tank drawer is withdrawn, the tank drawer may be maintained in the stably mounted state, as well as, the main body may not be reversed by the movement of the center of gravity. Therefore, the tank drawer may be stably used.

Although embodiments have been described with reference to a number of illustrative embodiments thereof, it should be understood that numerous other modifications and embodiments can be devised by those skilled in the art.

More particularly, various variations and modifications are possible in the component parts and/or arrangements of the subject combination arrangement within the scope of the invention, as defined by the appended claims. In addition to variations and modifications in the component parts and/or arrangements, alternative uses will also be apparent to those skilled in the art.

## Claims

1. A dehumidifier (1) comprising: a main body in which a heat exchange module (30) is disposed; a water tank (800) disposed under the heat exchange module (30) to collect condensed water generated in the heat exchange module (30); a tank drawer (710) in which the water tank (800) is accommodated, the tank drawer (710) being slidably disposed on the main body; and a frame (600) supporting the heat exchange module (30), the frame (600) partitioning a space in which the tank drawer (710) is accommodated from a space in which a compressor (20) is provided, **characterized in that** the dehumidifier (1) further comprises:
a pinion gear (732) disposed on each of both sides of the tank drawer (710);
a main guide (630) disposed on each of both sides of the frame (600) and having a rack gear on a top surface thereof configured to couple with the pinion gear (732) and guide the slidable insertion/withdrawal of the tank drawer (710); and a sub guide (640) disposed on each of both sides of the frame (600) to accommodate a rotation protrusion (735), that protrudes from each of both side surface of the tank drawer (710),
wherein when the tank drawer (710) moves, the rotation protrusion (735) moves along and rotates in the sub guide (640).

2. The dehumidifier (1) according to claim 1, wherein the main guide (630) comprises:
a horizontal part (631) extending in a front/rear direction in which the tank drawer (710) is inserted and withdrawn; and
a rotation part (632), which is tilted or rounded to guide the rotation of the tank drawer (710), extending from an end of the horizontal part (631).

3. The dehumidifier (1) according to claim 2, wherein a rack gear is disposed on the horizontal part (631).

4. The dehumidifier (1) according to claim 3, further comprising a driving motor (733) coupled to the pinion gear (732).

5. The dehumidifier (1) according to any of claims 1 to 4, further comprising:
a guide member (734) disposed above a rotation shaft of the tank drawer (710) to protrude from each of both left and right surfaces of the tank drawer (710); and
a guide hole (633) passing through the main guide (630) to allow the guide member (734) to be inserted therein, thereby guiding the movement of the guide member (734).

6. The dehumidifier (1) according to any of claims 1 to 5, wherein a tilted part (737) that contacts a bottom surface of the main body and is tilted to allow the tank drawer (710) to be withdrawn forward by a self-weight thereof is further disposed on a bottom surface of the tank drawer (710).

7. The dehumidifier (1) according to claim 6, wherein a base roller (13), that contacts the tilted part (737) and is rolled when the tank drawer (710) is inserted and withdrawn is disposed on the main body.

8. The dehumidifier (1) according to any of claims 1 to 7, wherein a main body support (14) extending downward to prevent the dehumidifier (1) from falling down onto the ground when a center of gravity of the tank drawer (710) moves due to the withdrawal of the tank drawer (710) is further disposed on a base plate (11) defining a bottom surface of the dehumidifier (1).

9. The dehumidifier (1) according to any of claims 1 to 8, wherein a rotation shaft of the tank drawer (710) is disposed at a rear side of the center of gravity of the tank drawer (710).

10. The dehumidifier (1) according to any of claims 1 to 9, wherein a locker (721) and latch (650) which are selectively hooked with each other to maintain a closed state of the tank drawer (710) are disposed on the tank drawer (710) and the frame (600), respectively.

11. The dehumidifier (1) according to any of claims 1 to 10, wherein, when the restriction between the latch (650) and the locker (721) is released, the latch (650) provides a repulsive force by which the tank drawer (710) is withdrawable.

12. The dehumidifier (1) according to any of claims 1 to 11, wherein the main guide (630) further extends than the sub guide (640) in a direction in which the tank drawer (710) is withdrawn.

13. The dehumidifier (1) according to any of claims 1 to 12, wherein the tank drawer (710) is opened upward to allow the water tank (300) to be accessible through the opening of the tank drawer (710), and
the opening of the tank drawer (710) is fully exposed in the state where the tank drawer (710) rotates.

14. The dehumidifier (1) according to any of claims 1 to 13, wherein the tank drawer (710) comprises:
a front surface part (720) defining a portion of an outer appearance of the main body; and
an accommodation part (730), which provides a space for accommodating the water tank (300), in a back surface of the front surface part.

15. The dehumidifier (1) according to claim 14, further comprising an upper extension part (731) extending toward the main guide (630) to move along the main guide (630) disposed on both side surfaces of the accommodation part (730) and a lower extension part (736) extending toward the sub guide (640) to move along the sub guide (640) disposed on both side surfaces of the accommodation part (730), respectively,
the upper extension part (731) configured to further lengthily extend than the lower extension part (736),
wherein the pinion gear (732) is coupled to a rear end of the upper extension part (731), and wherein the rotation protrusion (735) is protruding from an end part of the lower extension part (736).

## Patentansprüche

1. Entfeuchter (1), der aufweist: einen Hauptkörper, in dem ein Wärmeaustauschmodul (30) angeordnet ist; einen Wasserbehälter (800), der unter dem Wärmeaustauschmodul (30) angeordnet ist, um in dem Wärmeaustauschmodul (30) erzeugtes Kondenswasser zu sammeln; eine Behälterschublade (710), in welcher der Wasserbehälter (800) aufgenommen ist, wobei die Behälterschublade (710) verschiebbar auf dem Hauptkörper angeordnet ist; und ein Gerüst (600), welches das Wärmeaustauschmodul (30) hält, wobei das Gerüst (600) einen Raum, in dem die Behälterschublade (710) aufgenommen ist, von einem Raum, in dem ein Verdichter (20) bereitgestellt ist, unterteilt, **dadurch gekennzeichnet, dass** der Entfeuchter (1) ferner aufweist:
ein Ritzel (732), das auf jeder von beiden Seiten der Behälterschublade (710) angeordnet ist;
eine Hauptführung (630), die auf jeder von beiden Seiten des Gerüsts (600) angeordnet ist und eine Zahnstange auf ihrer oberen Oberfläche hat, die aufgebaut ist, um mit dem Ritzel (732) zu koppeln und das verschiebbare Einführen/Herausziehen der Behälterschublade (710) zu führen; und eine Nebenführung (640) hat, die auf jeder von beiden Seiten des Gerüsts (600) angeordnet ist, um einen Drehvorsprung (735), der von jeder der beiden Seitenoberflächen der Behälterschublade (710) vorsteht, aufzunehmen,
wobei, wenn die Behälterschublade (710) sich bewegt, der Drehvorsprung (735) sich entlang der Nebenführung (640) bewegt und sich darin dreht.

2. Entfeuchter (1) nach Anspruch 1, wobei die Hauptführung (630) aufweist:
einen horizontalen Teil (631), der sich in einer Vorn-/Hintenrichtung erstreckt, in der die Behälterschublade (710) eingeführt und herausgezogen wird; und
einen Drehteil (632), der geneigt oder gerundet ist, um die Drehung der Behälterschublade (710) zu führen, der sich von einem Ende des horizontalen Teils (631) erstreckt.

3. Entfeuchter (1) nach Anspruch 2, wobei auf dem horizontalen Teil (631) eine Zahnstange angeordnet ist.

4. Entfeuchter (1) nach Anspruch 3, der ferner einen Antriebsmotor (733) aufweist, der mit dem Ritzel (732) gekoppelt ist.

5. Entfeuchter (1) nach einem der Ansprüche 1 bis 4, der ferner aufweist:
ein Führungselement (734), das über einer Drehwelle der Behälterschublade (710) angeordnet ist, um von jeder der beiden linken und rechten Oberflächen der Behälterschublade (710) vorzustehen; und
ein Führungsloch (633), das durch die Hauptführung (630) geht, um zu ermöglichen, dass das Führungselement (734) in es eingesetzt wird, wodurch die Bewegung des Führungselements (734) geführt wird.

6. Entfeuchter (1) nach einem der Ansprüche 1 bis 5, wobei ferner ein geneigter Teil (737), der eine untere Oberfläche des Hauptkörpers berührt und geneigt ist, um zu ermöglichen, dass die Behälterschublade (710) durch ihr Eigengewicht nach vorne herausgezogen wird, auf einer unteren Oberfläche der Behälterschublade (710) angeordnet ist.

7. Entfeuchter (1) nach Anspruch 6, wobei eine Basisrolle (13), die den geneigten Teil (737) berührt und gerollt wird, wenn die Behälterschublade (710) eingeführt und herausgezogen wird, auf dem Hauptkörper angeordnet ist.

8. Entfeuchter (1) nach einem der Ansprüche 1 bis 7, wobei ferner eine Hauptkörperhalterung (14), die sich nach unten erstreckt, um zu verhindern, dass der Entfeuchter (I) auf den Boden herunterfällt, wenn ein Schwerpunkt der Behälterschublade (710) sich aufgrund des Herausziehens der Behälterschublade (710) bewegt, auf einer Grundplatte (11), die eine untere Oberfläche des Entfeuchters (1) bildet, angeordnet ist.

9. Entfeuchter (1) nach einem der Ansprüche 1 bis 8, wobei eine Drehwelle der Behälterschublade (710) auf einer Rückseite des Schwerpunkts der Behälterschublade (710) angeordnet ist.

10. Entfeuchter (1) nach einem der Ansprüche 1 bis 9, wobei ein Schließer (721) und ein Riegel (650), die wahlweise miteinander verhakt werden, um einen geschlossenen Zustand der Behälterschublade (710) aufrechtzuerhalten, jeweils auf der Behälterschublade (710) und dem Gerüst (600) angeordnet sind.

11. Entfeuchter (1) nach einem der Ansprüche 1 bis 10, wobei der Riegel (650), wenn die Beschränkung zwischen dem Riegel (650) und dem Schließer (721) gelöst wird, eine abstoßende Kraft bereitstellt, durch welche die Behälterschublade (710) herausziehbar ist.

12. Entfeuchter (1) nach einem der Ansprüche 1 bis 11, wobei die Hauptführung (630) sich weiter als die Nebenführung (640) in eine Richtung erstreckt, in welcher die Behälterschublade (710) herausgezogen wird.

13. Entfeuchter (1) nach einem der Ansprüche 1 bis 12, wobei die Behälterschublade (710) nach oben geöffnet ist, um zu ermöglichen, dass der Wasserbehälter (300) durch die Öffnung der Behälterschublade (710) zugänglich ist, und
die Öffnung der Behälterschublade (710) in dem Zustand, in dem sich die Behälterschublade (710) dreht, vollständig freiliegt.

14. Entfeuchter (1) nach einem der Ansprüche 1 bis 13, wobei die Behälterschublade (710) aufweist:
einen vorderen Oberflächenteil (720), der einen Abschnitt eines äußeren Erscheinungsbilds des Hauptkörpers definiert; und
einen Aufnahmeteil (730), der einen Raum zum Aufnehmen des Wasserbehälters (300) in einer hinteren Oberfläche des vorderen Oberflächenteils bereitstellt.

15. Entfeuchter (1) nach Anspruch 14, der ferner aufweist: einen oberen Erstreckungsteil (731), der sich in Richtung der Hauptführung (630) erstreckt, um sich entlang der Hauptführung (630) zu bewegen, die auf beiden Seitenoberflächen des Aufnahmeteils (730) angeordnet ist, und einen unteren Erstreckungsteil (736), der sich in Richtung der Nebenführung (640) erstreckt, um sich entlang der Nebenführung (640) zu erstrecken, die jeweils auf beiden Seitenoberflächen des Aufnahmeteils (730) angeordnet ist,
wobei der obere Erstreckungsteil (731) derart aufgebaut ist, dass er sich länger als der untere Erstreckungsteil (736) erstreckt,
wobei das Ritzel (732) mit einem hinteren Ende des oberen Erstreckungsteils (731) gekoppelt ist,
und wobei der Drehvorsprung (735) von einem Endteil des unteren Erstreckungsteils (736) vorsteht.

## Revendications

1. Déshumidificateur (1) comprenant: un corps principal dans lequel un module d'échange de chaleur (30) est disposé ; un réservoir d'eau (800) disposé sous le module d'échange de chaleur (30) pour collecter de l'eau condensée générée dans le module d'échange de chaleur (30) ; un tiroir de réservoir (710) dans lequel le réservoir d'eau (800) est agencé, le tiroir de réservoir (710) étant disposé de manière coulissante sur le corps principal ; et un châssis (600) supportant le module d'échange de chaleur (30), le châssis (600) séparant un espace dans lequel le tiroir de réservoir (710) est agencé d'un espace dans lequel un compresseur (20) est prévu, **caractérisé en ce que** le déshumidificateur (1) comprend en outre :
un pignon (732) disposé sur chacun des deux côtés du tiroir de réservoir (710) ;
un guide principal (630) disposé sur chacun des deux côtés du châssis (600) et ayant une crémaillère sur une surface supérieure de celui-ci configuré pour se coupler au pignon (732) et guider l'insertion/retrait coulissant(e) du tiroir de réservoir (710) ; et un sous-guide (640) disposé sur chacun des deux côtés du châssis (600) pour recevoir une saillie de rotation (735), qui fait saillie depuis chacune des deux surfaces latérales du tiroir de réservoir (710),
dans lequel lorsque le tiroir de réservoir (710) se déplace, la saillie de rotation (735) se déplace le long du sous-guide (640) et tourne dans celui-ci.

2. Déshumidificateur (1) selon la revendication 1, dans lequel le guide principal (630) comprend :
une partie horizontale (631) s'étendant dans une direction avant/arrière dans laquelle le tiroir de réservoir (710) est inséré et retiré ; et
une partie de rotation (632), qui est inclinée ou arrondie pour guider la rotation du tiroir de réservoir (710), s'étendant depuis une extrémité de la partie horizontale (631).

3. Déshumidificateur (1) selon la revendication 2, dans lequel une crémaillère est disposée sur la partie horizontale (631).

4. Déshumidificateur (1) selon la revendication 3, comprenant en outre un moteur d'entraînement (733) couplé au pignon (732).

5. Déshumidificateur (1) selon l'une quelconque des revendications 1 à 4, comprenant en outre :
un élément de guidage (734) disposé au-dessus d'un arbre de rotation du tiroir de réservoir (710) pour faire saillie depuis chacune des deux surfaces gauche et droite du tiroir de réservoir (710) ; et
un trou de guidage (633) traversant le guide principal (630) pour permettre à l'élément de guidage (734) d'être inséré dans celui-ci, guidant ainsi le mouvement de l'élément de guidage (734).

6. Déshumidificateur (1) selon l'une quelconque des revendications 1 à 5, dans lequel une partie inclinée (737), qui entre en contact avec une surface inférieure du corps principal et est inclinée pour permettre au tiroir de réservoir (710) d'être retiré vers l'avant par un poids propre de celui-ci, est en outre disposée sur une surface inférieure du tiroir du réservoir (710).

7. Déshumidificateur (1) selon la revendication 6, dans lequel un rouleau de base (13), qui entre en contact avec la partie inclinée (737) et est roulé lorsque le tiroir de réservoir (710) est inséré et retiré est disposé sur le corps principal.

8. Déshumidificateur (1) selon l'une quelconque des revendications 1 à 7, dans lequel un support de corps principal (14) s'étendant vers le bas pour empêcher le déshumidificateur (1) de tomber sur le sol lorsqu'un centre de gravité du tiroir de réservoir (710) se déplace en raison du retrait du tiroir de réservoir (710) est en outre disposé sur une plaque de base (11) définissant une surface inférieure du déshumidificateur (1).

9. Déshumidificateur (1) selon l'une quelconque des revendications 1 à 8, dans lequel un arbre de rotation du tiroir de réservoir (710) est disposé dans un côté arrière du centre de gravité du tiroir de réservoir (710).

10. Déshumidificateur (1) selon l'une quelconque des revendications 1 à 9, dans lequel un dispositif de verrouillage (721) et un verrou (650) qui sont sélectivement accrochés l'un à l'autre pour maintenir un état fermé du tiroir de réservoir (710) sont disposés sur le tiroir de réservoir (710) et le châssis (600), respectivement.

11. Déshumidificateur (1) selon l'une quelconque des revendications 1 à 10, dans lequel, lorsque la restriction entre le verrou (650) et le dispositif de verrouillage (721) est libérée, le verrou (650) fournit une force répulsive par laquelle le tiroir de réservoir (710) peut être retiré.

12. Déshumidificateur (1) selon l'une quelconque des revendications 1 à 11, dans lequel le guide principal (630) s'étend plus loin que le sous-guide (640) dans une direction dans laquelle le tiroir de réservoir (710) est retiré.

13. Déshumidificateur (1) selon l'une quelconque des revendications 1 à 12, dans lequel le tiroir de réservoir (710) est ouvert vers le haut pour permettre au réservoir d'eau (300) d'être accessible par l'ouverture du tiroir de réservoir (710), et
l'ouverture du tiroir de réservoir (710) est entièrement exposée dans l'état où le tiroir de réservoir (710) tourne.

14. Déshumidificateur (1) selon l'une quelconque des revendications 1 à 13, dans lequel le tiroir de réservoir (710) comprend :
une partie de surface avant (720) définissant une portion d'un aspect extérieur du corps principal ; et
une partie de réception (730), qui fournit un espace pour recevoir le réservoir d'eau (300), dans une surface arrière de la partie de surface avant.

15. Déshumidificateur (1) selon la revendication 14, comprenant en outre une partie d'extension supérieure (731) s'étendant vers le guide principal (630) pour se déplacer le long du guide principal (630) disposée sur les deux surfaces latérales de la partie de réception (730) et une partie d'extension inférieure (736) s'étendant vers le sous-guide (640) pour se déplacer le long du sous-guide (640) disposée sur les deux surfaces latérales de la partie de réception (730), respectivement,
la partie d'extension supérieure (731) étant configurée pour s'étendre à une longueur supérieure à celle de la partie d'extension inférieure (736),
dans lequel le pignon (732) est couplé à une extrémité arrière de la partie d'extension supérieure (731), et
dans lequel la saillie de rotation (735) fait saillie depuis une partie d'extrémité de la partie d'extension inférieure (736).
